(19) Europäisches Patentamt
European Patent Office
Office européen des brevets

(11) **EP 1 639 727 B1**

(12) **EUROPEAN PATENT SPECIFICATION**

(45) Date of publication and mention
of the grant of the patent:
**30.04.2014 Bulletin 2014/18**

(21) Application number: **04736580.4**

(22) Date of filing: **10.06.2004**

(51) Int Cl.:
**H04B 10/2575** *(2013.01)*

(86) International application number:
**PCT/JP2004/008473**

(87) International publication number:
**WO 2004/112285 (23.12.2004 Gazette 2004/52)**

(54) **SYSTEM, DEVICE, AND METHOD FOR RADIO FREQUENCY OPTICAL TRANSMISSION**

SYSTEM, VORRICHTUNG UND METHODE ZUR OPTISCHEN RADIOFREQUENZSIGNALÜBERTRAGUNG

SYSTEME, DISPOSITIF ET PROCEDE DE TRANSMISSION OPTIQUE DE RADIOFREQUENCES

(84) Designated Contracting States:
**DE FR GB IT**

(30) Priority: **13.06.2003 JP 2003169066**

(43) Date of publication of application:
**29.03.2006 Bulletin 2006/13**

(73) Proprietor: **Panasonic Corporation
Kadoma-shi
Osaka 571-8501 (JP)**

(72) Inventors:
• **MASUDA, Kouichi
Osaka 573-0071 (JP)**
• **SASAI, Hiroyuki
Osaka 576-0017 (JP)**

(74) Representative: **Gassner, Wolfgang
Dr. Gassner & Partner
Patentanwälte
Marie-Curie-Strasse 1
91052 Erlangen (DE)**

(56) References cited:
**EP-A- 0 403 991      EP-A- 1 107 487
WO-A1-02/061995    US-A- 5 940 196
US-A- 5 940 196       US-A1- 2002 012 495**

• SMITH G H ET AL: "OVERCOMING CHROMATIC-DISPERSION EFFECTS IN FIBER-WIRELESS SYSTEMS INCORPORATING EXTERNAL MODULATORS" IEEE TRANSACTIONS ON MICROWAVE THEORY AND TECHNIQUES, IEEE INC. NEW YORK, US, vol. 45, no. 8, PART 2, 1 August 1997 (1997-08-01), pages 1410-1415, XP000696770 ISSN: 0018-9480 cited in the application

**Description**

TECHNICAL FIELD

The present invention relates to a system, device, and method for radio frequency (RF) optical transmission, and more particularly to a subcarrier optical transmission system for transmitting a modulated RF signal (in particular, a signal in a millimeter-wave band), a device (a control station) for use in the system, and an RF optical transmission method for use with the system.

BACKGROUND ART

In a system for performing radio communication using an RF signal in a microwave or millimeter-wave band, for example, it has been expected to transmit a signal between a control station and a base station using an optical transmission scheme which uses an optical fiber offering a wide transmission band and low transmission loss. It is expected that a frequency band for use in radio communication is shifted from the microwave band to the millimeter-wave band. Accordingly, there has been an increasing need of a radio communication system using an RF signal, particularly, in a millimeter-wave band.

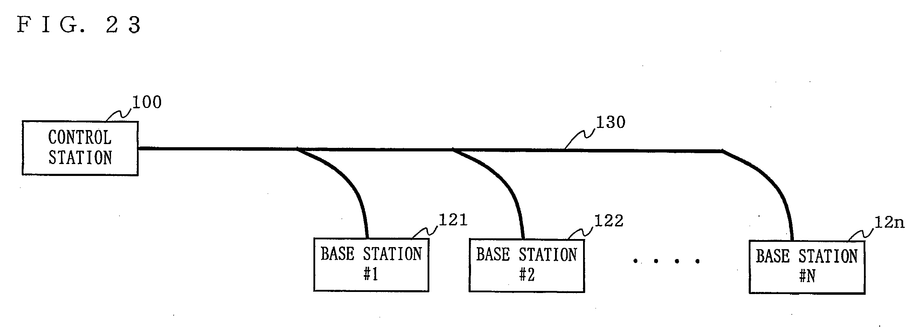

FIG. 23 is a schematic diagram showing a conventional radio communication system using an RF signal. In FIG. 23, the conventional radio communication system includes a control station 100 for transmitting an optical signal, n base stations 121 through 12n (n≧1, same below) for receiving the optical signal, thereby performing radio communication, and an optical fiber 130 for transferring the optical signal. The control station 100 transmits an optical signal modulated with an RF signal in a microwave or millimeter-wave band, for example. The optical signal transmitted from the control station 100 propagates through the optical fiber 130 to each of the base stations 121 through 12n, where a photoreceiver (not shown) performs optical-electrical conversion on the optical signal. A signal obtained by the optical-electrical conversion is transmitted to a receiver terminal device (not shown) as an RF signal in a microwave or millimeter-wave band, for example.

However, in the case where, for example, 1.55 μm light modulated with the RF signal propagates through a 1.31 μm zero-dispersion fiber, a signal power intensity of the 1.55 μm light is periodically attenuated at periodical transmission distances. This periodic attenuation of the signal power intensity occurs because upper and lower sideband components generated when the intensity of the optical signal is modulated with the RF signal are influenced by chromatic dispersion in the optical fiber.

Specifically, in the case where the intensity of the optical signal is modulated with the RF signal, the upper and lower sideband components generated in upper and lower frequency bands of an optical carrier wave are spaced from each other by a distance equal to twice the length of the frequency of the modulated optical signal. Accordingly, variation in phase caused when propagating through the optical fiber is considerably different between the upper and lower sideband components. Therefore, depending on the distance the modulated optical signal propagates, the upper and lower sideband components can be 180° out of phase with each other. If the photoreceiver performs optical-electrical conversion on the modulated optical signal in which the upper and lower sideband components are 180° out of phase with each other, a beat component produced by the optical carrier wave and the upper sideband and a beat component produced by the optical carrier wave and the lower sideband cancel out each other, resulting in loss of the modulated optical signal subjected to the optical-electrical conversion.

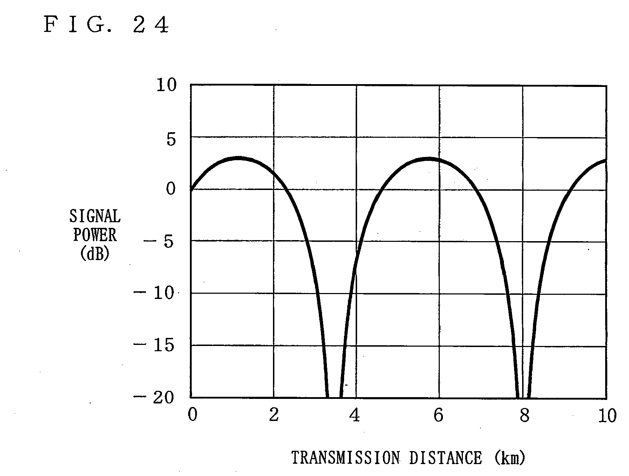

FIG. 24 is a graph showing an exemplary relationship between transmission distances and power of received transmission signals. As is apparent from FIG. 24, the modulated optical signal subjected to the optical-electrical conversion is lost at periodical transmission distances. As the frequency of the modulated optical signal becomes higher, the periodical transmission distances become narrower. In optical transmission, in the case of transmitting a modulated signal, particularly a millimeter-wave signal, the signal might be lost at periodical transmission distances.

In order to prevent the above problem, optical single-sideband (SSB) modulation is considered to be used for reducing the influence of chromatic dispersion, thereby preventing amodulated signal subjected to optical-electrical conversion from being lost. This technique is described in detail in, for example, Graham H. Smith et al., "Overcoming Chromatic Dispersion Effects in Fiber-Wireless Systems Incorporating External Modulators", IEEE Transactions on Microwave Theory and Techniques, Vol. 45, No. 8, pp. 1410-1415, August, 1997.

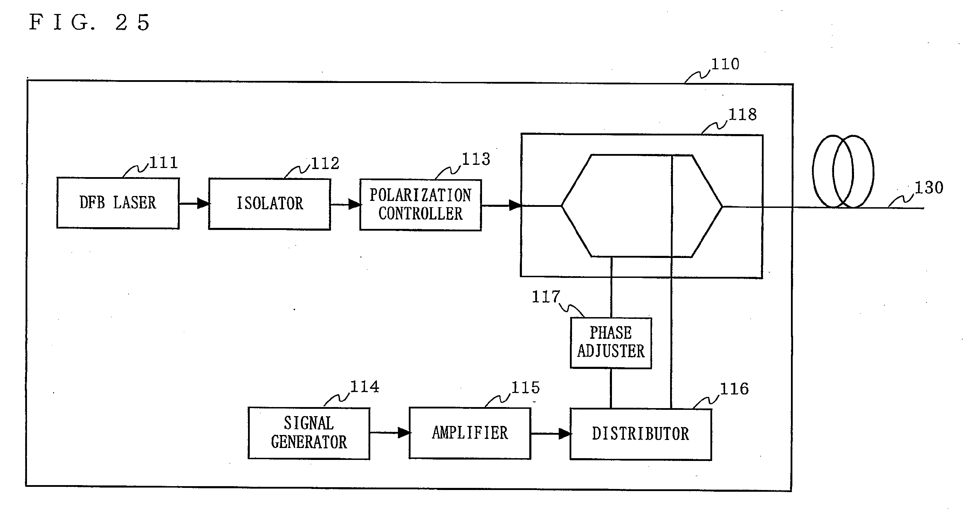

FIG. 25 is a block diagram showing the structure of a conventional optical transmitter 110 described in the above-mentioned publication. The optical transmitter 110 corresponds to the control station 100 shown in FIG. 23.

In FIG. 25, the optical transmitter 110 includes a DFB laser 111, an isolator 112, a polarization controller 113, a signal generator 114, an amplifier 115, a distributor 116, a phase adjuster 117, and a Mach-Zehnder optical intensity modulator 118.

The DFB laser 111 is operable to output an optical signal as a carrier wave. The optical signal outputted from the DFB laser 111 is inputted into the Mach-Zehnder optical intensity modulator 118 via the isolator 112 and the polarization controller 113. The isolator 112 is operable to prevent light reflected by the polarization controller 113 from returning to the DFB laser 111. The isolator 112 is typically included in the DFB laser 111. The polarization controller 113 is operable to control output light so as to have a predetermined polarization plane. The signal generator 114 is operable to output an RF optical transmission signal. The RF optical transmission signal is amplified to a predetermined level by the amplifier 115, and is divided into two signals by the distributor 116. One of the two signals is inputted into the Mach-Zehnder optical intensitymodulator118without being processed, while the other signal is phase-shifted by 90° by the phase adjuster 117, and thereafter inputted into the Mach-Zehnder optical intensity modulator 118.

By modulating the intensity of the optical signal inputted into the Mach-Zehnder optical intensity modulator 118 with the RF signal phase-shifted by 90°, it is made possible to obtain an optical signal containing only an optical carrier wave and single-sideband components. In this manner, the SSB modulation is carried out using a signal phase-shifted by 90°, i.e. , a signal having a phase advanced or delayed by 90°.

In the case where an RF signal containing only a carrier wave and single-sideband components as describedabove is modulated and subjected to optical-electrical conversion, upper and lower sidebands, which are 180° out of phase with each other, are not generated. Accordingly, the modulated RF signal after the optical-electrical conversion is not lost even if it is transmitted a long distance via an optical fiber. Therefore, in optical transmission using the SSB modulation, it is possible to prevent the modulated RF signal from being lost due to the influence of chromatic dispersion.

In the above-described conventional transmission technique, however, it is necessary to divide an RF signal into two signals and perform a phase adjustment on one of the two signals such that the phase of the signal is advanced or delayed by 90°. Moreover, considerably high adjustment accuracy is required for the phase adjustment since the wavelength of an RF signal, particularly a millimeter-wave signal, is considerably short.

EP 1 107 487 A discloses a radio frequency optical transmission system for optical transmitting a radio frequency signal in accordance with the preamble of claim 1.

The present invention aims to provide an RF optical transmission system having a simple structure while allowing a signal to be prevented from being lost due to the influence of chromatic dispersion without requiring considerably high adjustment accuracy. The present invention also aims to provide a method for use with the system.

DISCLOSURE OF THE INVENTION

This object is solved by the features of independent claims 1 and 15. Embodiments of the invention are defined by the features of claims 2 to 14.

As described above, in the present invention, two phase-conjugated signals are transmitted from the control station to the base station. The base station receives one of the two phase-conjugated signals which is predetermined based on a distance from the control station or determined by comparing the two phase-conjugated signals with respect to a signal power intensity level. Thus, the base station is able to readily receive a radio frequency signal having a greater power intensity without requiring considerably high adjustment accuracy.

BRIEF DESCRIPTION OF THE DRAWINGS

FIG. 1 is a diagram schematically showing an exemplary structure of radio frequency optical transmission systems according to first through fourth embodiments of the present invention;
FIG. 2 is a block diagram showing an exemplary structure of an optical transmission section as described in the first through fourth embodiments;
FIG. 3 is a block diagram illustrating a structure of a base station described in the first embodiment;
FIG. 4 is a diagram showing bias voltage dependence of an intensity of optical signals outputted from an optical intensity modulation section included in an optical transmission section of a radio frequency optical transmission system of the present invention;
FIG. 5 is a diagram showing bias voltage dependence of an intensity of an optical signal outputted from an optical intensity modulation section included in a conventional optical transmission section;
FIG. 6 shows transmission distance dependence of a power intensity of a radio frequency signal in a conventional radio frequency optical transmission system;
FIG. 7 shows transmission distance dependence of a power intensity of a radio frequency signal in the radio frequency optical transmission system of the present invention;
FIG. 8 is a block diagram showing a structure of a base station described in the second embodiment;
FIG. 9 is a block diagram showing a structure of a base station described in the third embodiment;
FIG. 10 is a block diagram showing a structure of a base station described in the fourth embodiment;
FIG. 11 is a diagram schematically showing an exemplary structure of radio frequency optical transmission systems according to fifth through eighth embodiments of the present invention;
FIG. 12 is a block diagram showing an exemplary structure of an optical transmission section as described in the fifth through eighth embodiments;
FIG. 13 is a block diagram showing a structure of a base station described in the fifth embodiment;
FIG. 14 is a block diagram showing a structure of a base station described in the sixth embodiment;
FIG. 15 is a block diagram showing a structure of a base station described in the seventh embodiment;
FIG. 16 is a block diagram showing a structure of a base station described in the eighth embodiment;
FIG. 17 is a diagram schematically showing an exemplary structure of radio frequency optical transmission systems according to ninth through twelfth embodiments of the present invention;
FIG. 18 is a block diagram showing an exemplary structure of an optical transmission section as described in the ninth through twelfth embodiments;
FIG. 19 is a block diagram showing a structure of a base station described in the ninth embodiment;
FIG. 20 is a block diagram showing a structure of a base station described in the tenth embodiment;
FIG. 21 is a block diagram showing a structure of a base station described in the eleventh embodiment;
FIG. 22 is a block diagram showing a structure of a base station described in the twelfth embodiment;
FIG. 23 is a schematic diagram showing a conventional radio communication system using a radio frequency signal;
FIG. 24 is a graph showing an exemplary relationship between transmission distances and power of received transmission signals; and
FIG. 25 is a block diagram showing an exemplary structure of a conventional optical transmitter.

BEST MODE FOR CARRYING OUT THE INVENTION

(First Embodiment)

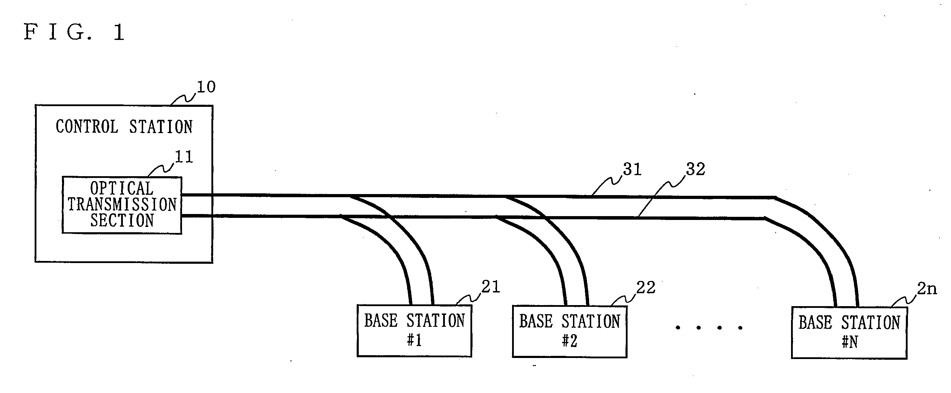

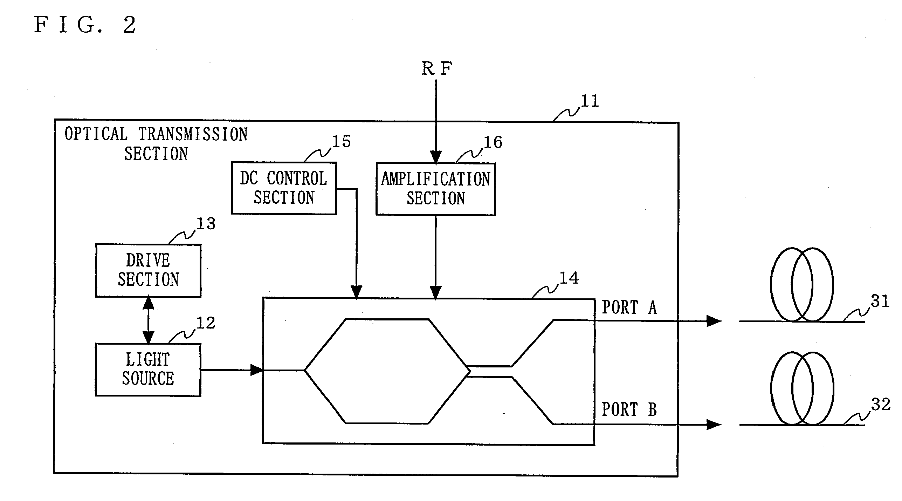

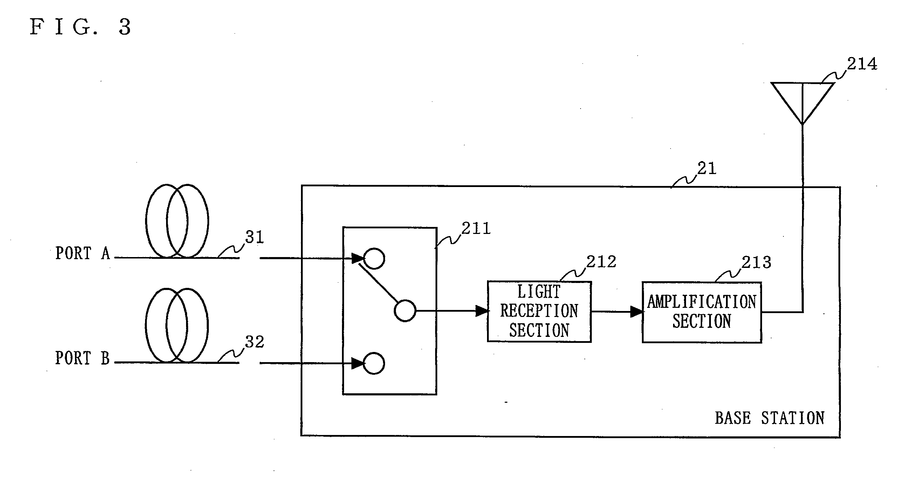

FIG. 1 is a diagram schematically showing a radio frequency optical transmission system according to a first embodiment of the present invention. In the radio frequency optical transmission system according to the first embodiment shown in FIG. 1, a control station 10 is connected to n base stations 21-2n by an optical transmission path which includes, for example, two optical fibers 31 and 32. FIG. 2 is a block diagram showing a structure of an optical transmission section 11 provided in the control station 10. In FIG. 2, the optical transmission section 11 includes a light source 12, a drive section 13, an optical intensity modulation section 14, a DC control section 15, and an amplification section 16. FIG. 3 is a block diagram illustrating a structure of the base station 21. In FIG. 3, the base station 21 includes an input switching section 211, a light reception section 212, an amplification section 213, and an antenna 214. Other base stations 22 through 2n are configured in a manner similar to the base station 21, and therefore only the base station 21 is described in detail below.

Firstly, an operation of the radio frequency optical transmission system according to the first embodiment is described.

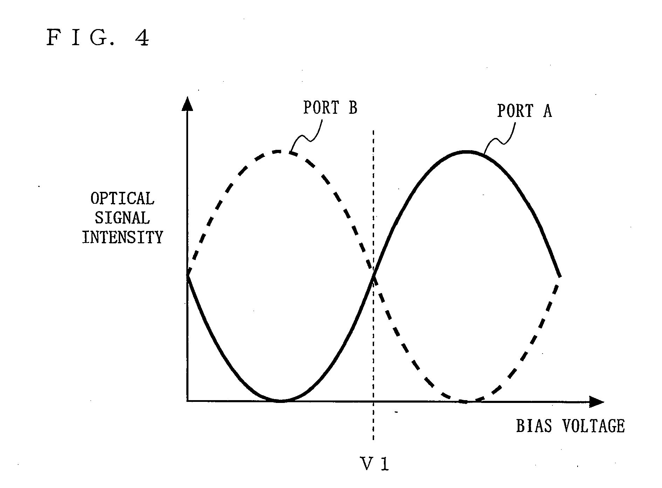

In the optical transmission section 11, the light source 12 is controlled by the drive section 13 so as to output a prescribed optical signal. The amplification section 16 amplifies an externally-inputted radio frequency (RF) transmission signal to a desired level. The DC control section 15 controls a direct current bias voltage to be supplied to the optical intensity modulation section 14. The optical intensity modulation section 14 initially modulates the intensity of an optical signal outputted from the light source 12 with the RF transmission signal amplified by the amplification section 16. Then, the optical intensity modulation section 14 divides the optical signal, which has its intensity modulated, into two optical signals. The optical intensity modulation section 14 outputs one of the two optical signals to a port A (or a port B) without processing it, and the other optical signal is inverted and outputted to the port B (or the port A). Consequently, two optical signals, which are phase conjugated with respect to each other (i.e., 180° out of phase with each other), are outputted from the ports A and B. FIG. 4 is a diagram showing an exemplary bias voltage-intensity characteristic (i. e. , bias voltage dependence) of optical signals outputted from the ports A and B of the optical intensity modulation section 14. The two optical signals outputted from the ports A and B of the optical intensity modulation section 14 are respectively transmitted through the optical fibers 31 and 32 to each of the base stations 21 through 2n.

In the base station 21, each of the two optical signals transmitted from the control station 10 through the optical fibers 31 and 32 is inputted into a corresponding one of two input terminals of the input switching section 211. The input switching section 211 is an optical switch having two input terminals and one output terminal, for example, and selectively outputs one of the two optical signals inputted into the input terminals thereof, based on a distance between the control station 10 and the base station 21. The light reception section 212 receives the optical signal selectively outputted from the input switching section 211, and converts the received optical signal into a radio frequency signal. The amplification section 213 amplifies the radio frequency signal obtained by the light reception section 212 to a desired level. The amplified radio frequency signal is radiated into space from the antenna 214.

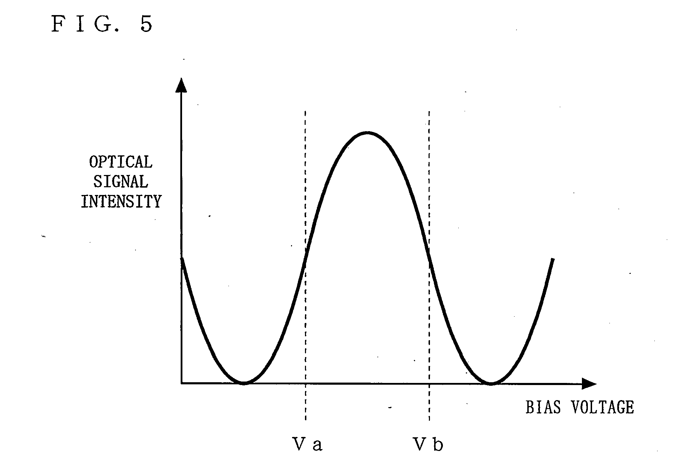

Described next is an effect achieved by the radio frequency optical transmission system of the present invention in comparison to an effect achieved by a conventional system. FIG. 5 is a diagram showing an exemplary bias voltage-intensity characteristic of an optical signal outputted from the conventional system having one output port. Expressions (1) and (2) shown below respectively represent reception signals Pa and Pb obtained after optical signals having their intensities modulated with a radio frequency signal when bias voltages are set at Va and Vb shown in FIG. 5 are transmitted through optical fibers.

$$\mathbf{Pa} = 1 + 2\sqrt{1 + J_0^2(k)} J_1(k) \cos(\alpha f_1^2 + \theta) \cos(2\pi f_1 t + 2\alpha f_1) \quad \ldots (1)$$

$$\mathbf{Pb} = 1 + 2\sqrt{1 + J_0^2(k)} J_1(k) \cos(\alpha f_1^2 - \theta) \cos(2\pi f_1 t + 2\alpha f_1) \quad \ldots (2)$$

In the above expressions (1) and (2), $k = \pi V d / 2 V \pi$, $V \pi$ is a half wave voltage of the optical intensity modulation section, and Vd is a radio frequency signal voltage.

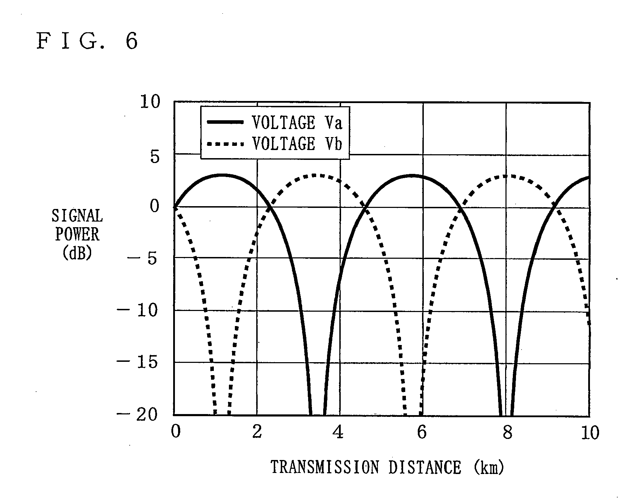

FIG. 6 shows transmission distance dependence obtained based on the above expressions (1) and (2) with respect to power intensities of radio frequency signals in the case of transmitting optical signals through 1.3 $\mu$m zero-dispersion optical fibers. In FIG. 6, it is assumed that the radio frequency signals each have a frequency of 40 GHz, and an optical received power is kept constant regardless of the transmission distance. Power intensities of the radio frequency signals are normalized with a power intensity obtained when the transmission distance is zero. As is appreciated from FIG. 6, the power intensities of the radio frequency signals after transmission show characteristics such that the radio frequency signal with each bias voltage is extremely attenuated at regular intervals. These two characteristics are contradictory to each other, and therefore by optimally selecting one of the bias voltages, it is possible to keep the normalized power intensity of the radio frequency signal so as to be equal to or more than 0 dB.

In a radio communication system in which the control station and a base station are connected one-to-one, by changing a bias voltage to be set, it is made possible to obtain a radio frequency signal having a power intensity of 0 dB or more. However, in a radio communication system in which the control station and n base stations are connected one-to-n, transmission distances between the control station and the base stations are irregular and various Accordingly, it can be considered that there is a considerable difficulty in setting a bias voltage such that all the base stations are able to obtain a radio frequency signal having a power intensity of 0 dB or more.

In order to solve the above problem, the radio frequency optical transmission system according to the first embodiment of the present invention includes the optical intensity modulation section 14 provided in the control station 10 and having a function of dividing an intensity modulated signal into two signals and a function of inverting the phase of the intensity modulated signal, as well as a function of modulating the intensity of an optical signal with an RF signal. The optical intensity modulation section 14 outputs two optical signals, which are phase conjugated with respect to together. In each of the base stations 21-2n, the two phase-conjugated optical signals are simultaneously inputted, and the input switching section 211 selects one of the two phase-conjugated signals which is more suitable for the base station.

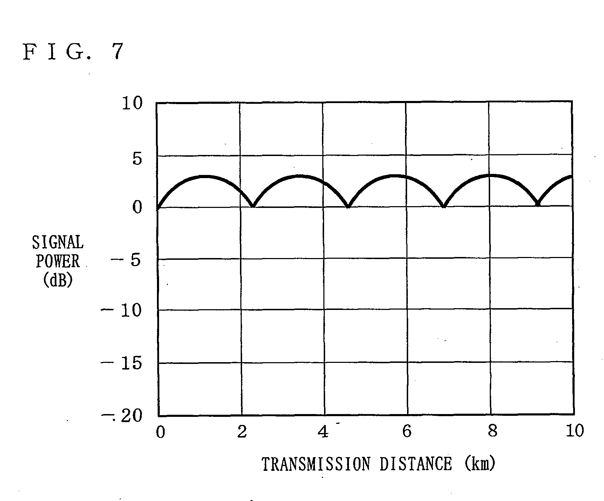

It can be readily understood from FIGs. 4 and 5 that for example, in the case where the bias voltage is set at V1 shown in FIG. 4, an optical signal outputted from the port A is equivalent to an optical signal obtained when the bias voltage is set at Va shown in FIG. 5, and similarly, an optical signal outputted from the port B is equivalent to an optical signal obtained when the bias signal is set at Vb shown in FIG. 5. Accordingly, the optical signals obtained from both of the ports A and B are transmitted through their respective different optical fibers to each of the base stations 21-2n, and each of the base stations 21-2n suitably selects and receive the optical signal outputted from either the port A or B. For example, in FIG. 6, base stations, which are located away from the control station by a transmission distance of between 0 km and 2.3 km or between 4.6 km and 6.9 km, selectively receive the optical signal from the port A, while base stations, which are located away from the control station at a transmission distance of between 2.3 km and 4.6 km or between 6.9 km and 9.2 km, selectively receive the optical signal from the port B. Accordingly, as shown in FIG. 7, it is possible to obtain a signal having a radio frequency signal power intensity of 0 dB or more at any transmission distance. Therefore, in the case where the optical received power is constant, it is possible to obtain an RF signal having a power which is greater when it is transmitted than when the transmission distance is zero.

As described above, in the radio frequency optical transmission system according to the first embodiment of the present invention, two phase-conjugated optical signals are transmitted from the control station. Each base station receives a predetermined one of the two phase-conjugated optical signals based on a transmission distance from the control station. Therefore, the base station is able to readily receive a radio frequency signal having a high power intensity without requiring considerably high adjustment accuracy.

(Second Embodiment)

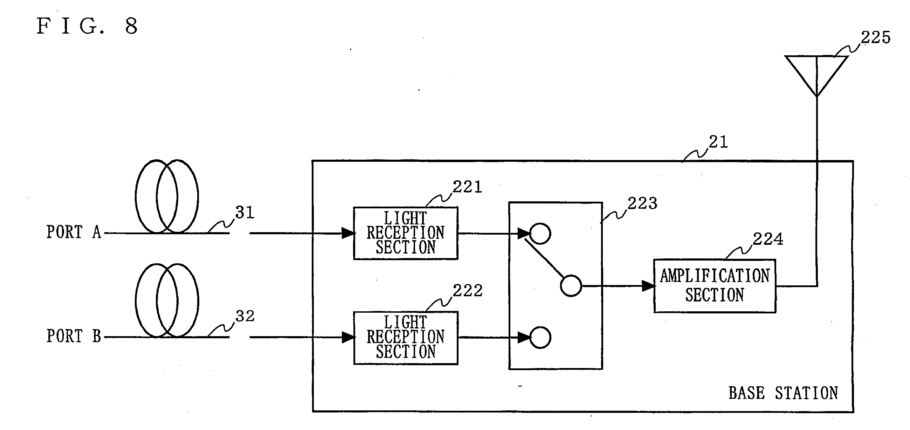

In a second embodiment, the base stations 21 through 2n used in the radio frequency optical transmission system according to the first embodiment are structured in a manner different from those shown in FIG. 3. FIG. 8 is a block diagram illustrating a structure of the base station 21 included in a radio frequency optical transmission system according to the second embodiment. In FIG. 8, the base station 21 includes a first light reception section 221, a second light reception section 222, an input switching section 223, an amplification section 224, and an antenna 225.

In the base station 21, two optical signals transmitted from the control station 10 through the optical fibers 31 and 32 are inputted into the first and second light reception sections 221 and 222, respectively. The first and second light reception sections 221 and 222 convert the inputted optical signals into radio frequency signals. The input switching section 223 receives each of the radio frequency signals obtained through conversion by the first and second light reception sections 221 and 222, and selectively outputs one of the radio frequency signals based on a distance between the control station 10 and the base station 21. The amplification section 224 amplifies the radio frequency signal outputted from the input switching section 223 to a desired level. The amplified radio frequency signal is radiated into space from the antenna 225.

Note that although the second embodiment has been described with respect to a case where one amplification section 224 is provided between the antenna 225 and the input switching section 223, one or more amplification sections 224 can be provided both between the first light reception section 221 and the input switching section 223 and between the second light reception section 222 and the input switching section 223.

(Third Embodiment)

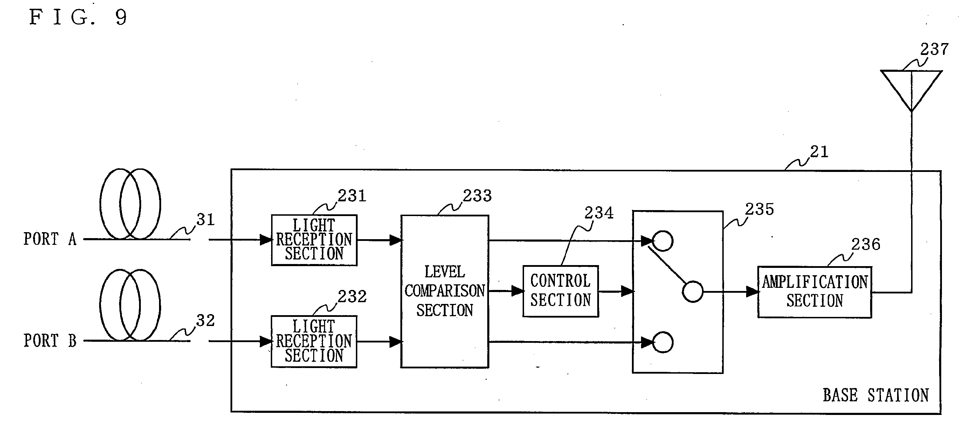

In a third embodiment, the base stations 21 through 2n used in the radio frequency optical transmission system according to the first embodiment are structured in a manner different from those shown in FIGs. 3 and 8. FIG. 9 is a block diagram illustrating a structure of the base station 21 included in a radio frequency optical transmission system according to the third embodiment. In FIG. 9, the base station 21 includes a first light reception section 231, a second light reception section 232, a level comparison section 233, a control section 234, an input switching section 235, an amplification section 236, and an antenna 237.

In the base station 21, two optical signals transmitted from the control station 10 through the optical fibers 31 and 32 are inputted into the first and second light reception sections 231 and 232, respectively. The first and second light reception sections 231 and 232 convert the inputted optical signals into radio frequency signals. The level comparison section 233 compares the radio frequency signals obtained through conversion by the first and second light reception sections 231 and 232 with respect to their power intensities. The control section 234 determines which one of the radio frequency signals has a greater power intensity based on a comparison result obtained by the level comparison section 233. The control section 234 then controls the input switching section 235 so as to output the radio frequency signal having a greater power intensity to the amplification section 236. The input switching section 235 receives each of the radio frequency signals obtained through conversion by the first and second light reception sections 231 and 232, and selectively outputs one of the radio frequency signals in accordance with an instruction given by the control section 234. The amplification section 236 amplifies the radio frequency signal outputted from the input switching section 235 to a desired level. The amplified radio frequency signal is radiated into space from the antenna 237.

In the above structure, the base station 21 is able to automatically select an optimum optical signal, i.e., a radio frequency signal having a high signal intensity. Note that although the third embodiment has been described with respect to a case where one amplification section 236 is provided between the input switching section 235 and the antenna 237, one or more amplification sections 236 can be provided both between the first light reception section 231 and the input switching section 235 and between the second light reception section 232 and the input switching section 235.

(Fourth Embodiment)

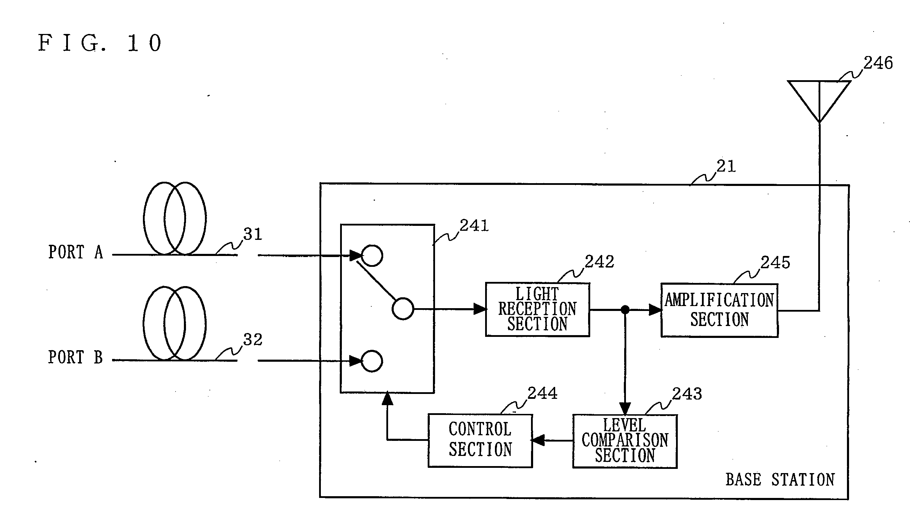

In a fourth embodiment, the base stations 21 through 2n used in the radio frequency optical transmission system according to the first embodiment are structured in a manner different from those shown in FIGs. 3, 8, and 9. FIG. 10 is a block diagram illustrating a structure of the base station 21 included in a radio frequency optical transmission system according to the fourth embodiment. In FIG. 10, the base station 21 includes an input switching section 241, a light reception section 242, a level comparison section 243, a control section 244, an amplification section 245, and an antenna 246.

In the base station 21, two optical signals transmitted from the control station 10 through the optical fibers 31 and 32 are inputted into the input switching section 241. The input switching section 241 selectively outputs one of the two optical signals in accordance with an instruction given by the control section 244. Note that at the time when the base station is initially provided, an optical signal is selected in accordance with default settings. The light reception section 242 receives the optical signal selectively outputted from the input switching section 241, and converts the received optical signal into a radio frequency signal. The level comparison section 243 detects a power intensity of the radio frequency signal obtained through conversion by the light reception section 242, and compares the detected power intensity with a reference value stored therein. As a result of comparison, if the detected power intensity is lower than the reference value, the level comparison section 243 instructs the control section 244 to switch the input switching section 241. Note that if the detected power intensity is higher than the reference value, the level comparison section 243 gives no instruction. The control section 244 switches the input switching section 241 in accordance with the instruction given by the level comparison section 243. The amplification section 245 receives the radio frequency signal obtained through conversion by the light reception section 242, and amplifies the received radio frequency signal to a desired level. The amplified radio frequency signal is radiated into space from the antenna 246.

In the above structure, the base station 21 is able to automatically select an optimum optical signal, i.e., a radio frequency signal having a high signal intensity. Note that although the fourth embodiment has been described with respect to a case where one amplification section 245 is provided between the light reception section 242 and the antenna 246, one or more amplification sections 245 can be provided both between the input switching section 241 and the light reception section 242 and between the light reception section 242 and the level comparison section 243.

(Fifth Embodiment)

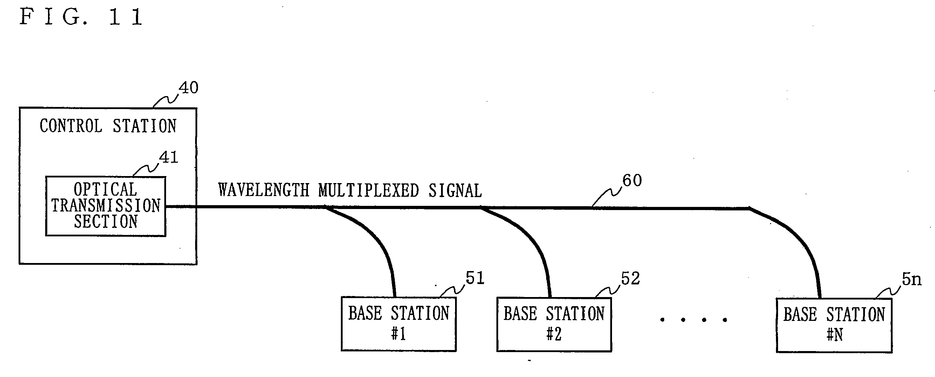

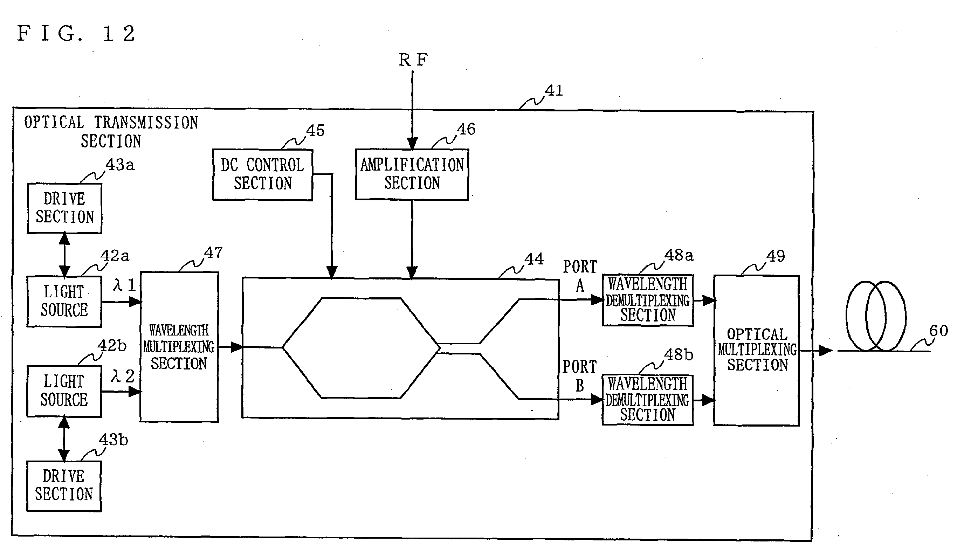

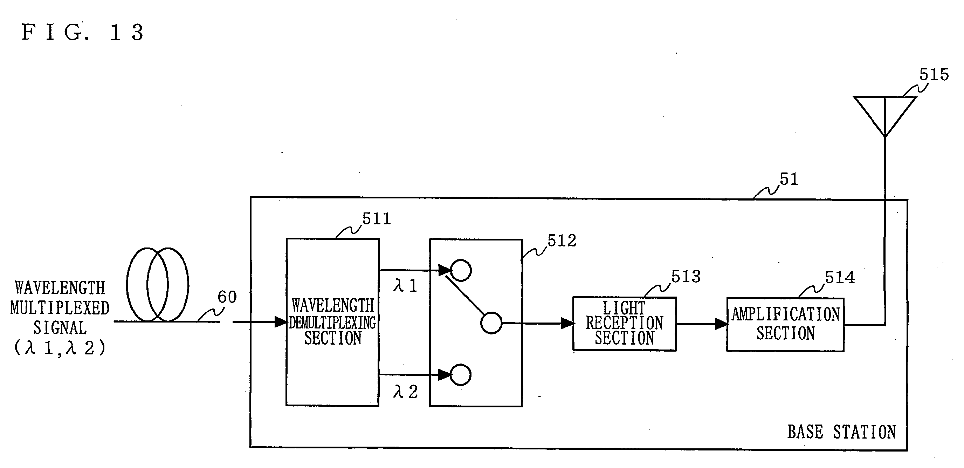

FIG. 11 is a diagram schematically showing a radio frequency optical transmission system according to a fifth embodiment of the present invention. In the radio frequency optical transmission system according to the fifth embodiment shown in FIG. 11, a control station 40 is connected to n base stations 51-5n by an optical transmission path which includes a single optical fiber 60. FIG. 12 is a block diagram showing a structure of an optical transmission section 41 provided in the control station 40. In FIG. 12, the optical transmission section 41 includes a first light source 42a, a second light source 42b, a first drive section 43a, a second drive section 43b, an optical intensity modulation section 44, a DC control section 45, an amplification section 46, a wavelength multiplexing section 47, a first wavelength demultiplexing section 48a, a second wavelength demultiplexing section 48b, and an optical multiplexing section 49. FIG. 13 is a block diagram illustrating a structure of the base station 51. In FIG. 13, the base station 51 includes a wavelength demultiplexing section 511, an input switching section 512, a light reception section 513, an amplification section 514, and an antenna 515. Other base stations 52 through 5n are configured in a manner similar to the base station 51, and therefore only the base station 51 is described in detail below.

In the optical transmission section 41, the first light source 42a is controlled by the first drive section 43a so as to output an optical signal having a wavelength of $\lambda 1$, and the second light source 42b is controlled by the second drive section 43b so as to output an optical signal having a wavelength of $\lambda 2$. The wavelength of $\lambda 1$ is different from the wavelength of $\lambda 2$ ($\lambda 1 \neq \lambda 2$). The wavelength multiplexing section 47 multiplexes the optical signal having the wavelength of $\lambda 1$ and the optical signal having the wavelength of $\lambda 2$ together. The amplification section 46 amplifies an externally-inputted radio frequency (RF) transmission signal to a desired level. The DC control section 45 controls a direct current bias voltage to be supplied to the optical intensity modulation section 44. The optical intensity modulation section 44 initially modulates the intensity of a multiplexed optical signal outputted from the wavelength multiplexing section 47 with the RF transmission signal amplified by the amplification section 46. Then, the optical intensity modulation section 44 divides the optical signal, which has its intensity modulated, into two optical signals. The optical intensity modulation section 44 outputs one of the two optical signals to a port A (or a port B) without processing it, and the other optical signal is inverted and outputted to the port B (or the port A). Consequently, two optical signals, which are phase conjugated with respect to each other (i.e., 180° out of phase with each other), are outputted from the ports A and B. The first wavelength demultiplexing section 48a separates only the optical signal having the wavelength of $\lambda 1$ from the optical signal outputted from the port A of the optical intensity modulation section 44, and outputs the optical signal having the wavelength of $\lambda 1$. The second wavelength demultiplexing section 48b separates only the optical signal having the wavelength of $\lambda 2$ from the optical signal outputted from the port B of the optical intensity modulation section 44, and outputs the optical signal having the wavelength of $\lambda 2$. The optical multiplexing section 49 multiplexes the optical signal having the wavelength of $\lambda 1$ obtained by the first wavelength demultiplexing section 48a and the optical signal having the wavelength of $\lambda 2$ obtained by the second wavelength demultiplexing section 48b into a multiplexed optical signal, and outputs the multiplexed optical signal via the optical fiber 60. The multiplexed optical signal outputted from the optical multiplexing section 49 is transmitted through the optical fiber 60 to each of the base stations 51 through 5n.

In the base station 51, the multiplexed optical signal transmitted from the control station 40 through the optical fiber 60 is inputted into the wavelength demultiplexing section 511. The wavelength demultiplexing section 511 demultiplexes the received multiplexed optical signal into an optical signal having a wavelength of λ1 and an optical signal having a wavelength of λ2, and inputs each of the optical signal having a wavelength of λ1 and the optical signal having a wavelength of λ2 into a corresponding one of input terminals of the input switching section 512. The input switching section 512 is an optical switch having two input terminals and one output terminal, for example, and selectively outputs one of the two optical signals inputted into the input terminals thereof, based on a distance between the control station 40 and the base station 51. The light reception section 513 receives the optical signal selectively outputted from the input switching section 512, and converts the received optical signal into a radio frequency signal. The amplification section 514 amplifies the radio frequency signal obtained by the light reception section 513 to a desired level. The amplified radio frequency signal is radiated into space from the antenna 515.

In order to solve the problem as described in the first embodiment, the radio frequency optical transmission system according to the fifth embodiment of the present invention includes the optical intensity modulation section 44 provided in the control station 40 and having a function of dividing an intensity modulated signal into two signals and a function of inverting the phase of the intensity modulated signal, as well as a function of modulating the intensity of an optical signal with a radio frequency signal. The optical intensity modulation section 44 outputs two phase-conjugated optical signals from two output ports. The fifth embodiment differs from the first embodiment in that a wavelength division multiplex scheme is used for reducing the number of optical fibers to one. As is apparent from the foregoing, also in the radio frequency optical transmission system according to the fifth embodiment, it is possible to obtain a signal having a radio frequency signal power intensity of 0 dB or more at any transmission distance (see FIG. 7).

As described above, in the radio frequency optical transmission system according to the fifth embodiment of the present invention, two phase-conjugated optical signals having different wavelengths are generated. The wavelengths of the two optical signals are multiplexed together to generate a multiplexed optical signal, and the generated multiplexed optical signal is transmitted from the control station. Each base station receives the multiplexed optical signal, and separates a predetermined one of the optical signals having different wavelengths from the received multiplexed optical signal based on a transmission distance from the control station. Therefore, the base station is able to readily receive a radio frequency signal having a high power intensity without requiring considerably high adjustment accuracy.

(Sixth Embodiment)

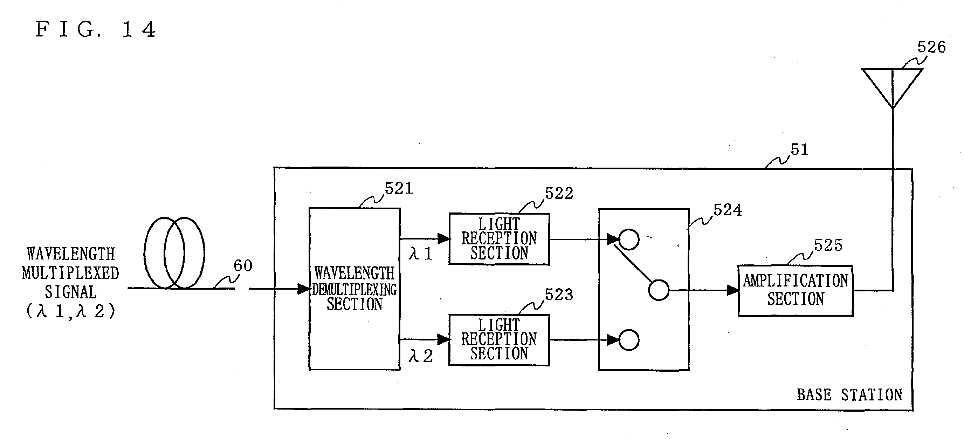

In a sixth embodiment, the base stations 51 through 5n used in the radio frequency optical transmission system according to the fifth embodiment are structured in a manner different from those shown in FIG. 13. FIG. 14 is a block diagram illustrating a structure of the base station 51 included in a radio frequency optical transmission system according to the sixth embodiment. In FIG. 14, the base station 51 includes a wavelength demultiplexing section 521, a first light reception section 522, a second light reception section 523, an input switching section 524, an amplification section 525, and an antenna 526.

In the base station 51, a multiplexed optical signal transmitted from the control station 40 through the optical fiber 60 is inputted into the wavelength demultiplexing section 521. The wavelength demultiplexing section 521 demultiplexes the received multiplexed optical signal into an optical signal having a wavelength of λ1 and an optical signal having a wavelength of λ2, and inputs the optical signal having a wavelength of λ1 and the optical signal having a wavelength of λ2 into the first and second light reception sections 522 and 523, respectively. The first and second light reception sections 522 and 523 convert the inputted optical signals into radio frequency signals. The input switching section 524 receives the radio frequency signals obtained through conversion by the first and second light reception sections 522 and 523, and selectively outputs one of the received radio frequency signals based on a distance between the control station 40 and the base station 51. The amplification section 525 amplifies the radio frequency signal outputted from the input switching section 524 to a desired level. The amplified radio frequency signal is radiated into space from the antenna 526.

Note that although the sixth embodiment has been described with respect to a case where one amplification section 525 is provided between the input switching section 524 and the antenna 526, one or more amplification sections 525 can be provided both between the first light reception section 522 and the input switching section 524 and between the second light reception section 523 and the input switching section 524.

(Seventh Embodiment)

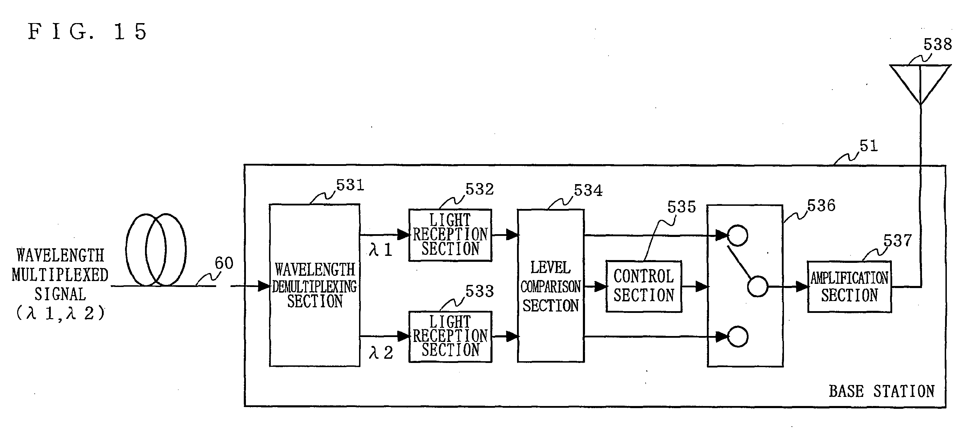

In a seventh embodiment, the base stations 51 through 5n used in the radio frequency optical transmission system according to the fifth embodiment are structured in a manner different from those shown in FIGs. 13 and 14. FIG. 15 is a block diagram illustrating a structure of the base station 51 included in a radio frequency optical transmission system according to the seventh embodiment. In FIG. 15, the base station 51 includes a wavelength demultiplexing section 531, a first light reception section 532, a second light reception section 533, a level comparison section 534, a control section 535, an input switching section 536, an amplification section 537, and an antenna 538.

In the base station 51, a multiplexed optical signal transmitted from the control station 40 through the optical fiber 60 is inputted into the wavelength demultiplexing section 531. The wavelength demultiplexing section 531 demultiplexes the received multiplexed optical signal into an optical signal having a wavelength of $\lambda 1$ and an optical signal having a wavelength of $\lambda 2$, and inputs the optical signal having a wavelength of $\lambda 1$ and the optical signal having a wavelength of $\lambda 2$ into the first and second light reception sections 532 and 533, respectively. The first and second light reception sections 532 and 533 convert the inputted optical signals into radio frequency signals. The level comparison section 534 compares the radio frequency signals obtained through conversion by the first and second light reception sections 532 and 533 with respect to their power intensities. The control section 535 determines which one of the radio frequency signals has a greater power intensity based on a comparison result obtained by the level comparison section 534. The control section 535 then controls the input switching section 536 so as to output the radio frequency signal having a greater power intensity to the amplification section 537. The input switching section 536 receives each of the radio frequency signals obtained through conversion by the first and second light reception sections 532 and 533, and selectively outputs one of the radio frequency signals in accordance with an instruction given by the control section 535. The amplification section 537 amplifies the radio frequency signal outputted from the input switching section 536 to a desired level. The amplified radio frequency signal is radiated into space from the antenna 538.

In the above structure, the base station 51 is able to automatically select an optimum optical signal, i.e., a radio frequency signal having a high signal intensity. Note that although the seventh embodiment has been described with respect to a case where one amplification section 537 is provided between the input switching section 536 and the antenna 538, one or more amplification sections 537 can be provided both between the first light reception section 532 and the input switching section 536 and between the second light reception section 533 and the input switching section 536.

(Eighth Embodiment)

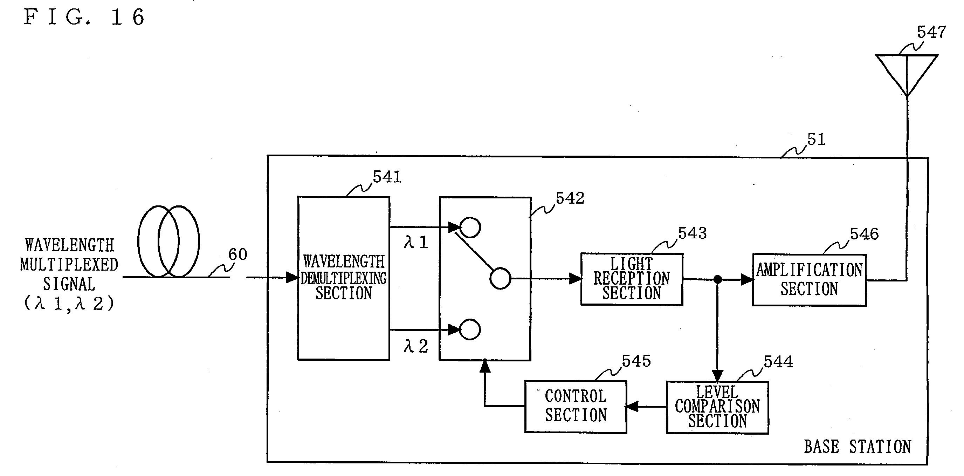

In an eighth embodiment, the base stations 51 through 5n used in the radio frequency optical transmission system according to the fifth embodiment are structured in a manner different from those shown in FIGs. 13 through 15. FIG. 16 is a block diagram illustrating a structure of the base station 51 included in a radio frequency optical transmission system according to the eighth embodiment. In FIG. 16, the base station 51 includes a wavelength demultiplexing section 541, an input switching section 542, a light reception section 543, a level comparison section 544, a control section 545, an amplification section 546, and an antenna 547.

In the base station 51, a multiplexed optical signal transmitted from the control station 40 through the optical fiber 60 is inputted into the wavelength demultiplexing section 541. The wavelength demultiplexing section 541 demultiplexes the received multiplexed optical signal into an optical signal having a wavelength of $\lambda 1$ and an optical signal having a wavelength of $\lambda 2$, and inputs the optical signal having a wavelength of $\lambda 1$ and the optical signal having a wavelength of $\lambda 2$ into a corresponding one of input terminals of the input switching section 542. The input switching section 542 selectively outputs one of the optical signal having a wavelength of $\lambda 1$ and the optical signal having a wavelength of $\lambda 2$ in accordance with an instruction given by the control section 545. Note that at the time when the base station is initially provided, an optical signal is selected in accordance with default settings. The light reception section 543 receives the optical signal selectively outputted from the input switching section 542, and converts the received optical signal into a radio frequency signal. The level comparison section 544 detects a power intensity of the radio frequency signal obtained through conversion by the light reception section 543, and compares the detected power intensity with a reference value stored therein. As a result of comparison, if the detected power intensity is lower than the reference value, the level comparison section 544 instructs the control section 545 to switch the input switching section 542. Note that if the detected power intensity is higher than the reference value, the level comparison section 544 gives no instruction. The control section 545 switches the input switching section 542 in accordance with the instruction given by the level comparison section 544. The amplification section 546 receives the radio frequency signal obtained through conversion by the light reception section 543, and amplifies the received radio frequency signal to a desired level. The amplified radio frequency signal is radiated into space from the antenna 547.

In the above structure, the base station 51 is able to automatically select an optimum optical signal, i.e., a radio frequency signal having a high signal intensity. Note that although the eighth embodiment has been described with respect to a case where one amplification section 546 is provided between the light reception section 543 and the antenna 547, one or more amplification sections 546 can be provided both between the input switching section 542 and the light reception section 543 and between the light reception section 543 and the level comparison section 544.

(Ninth Embodiment)

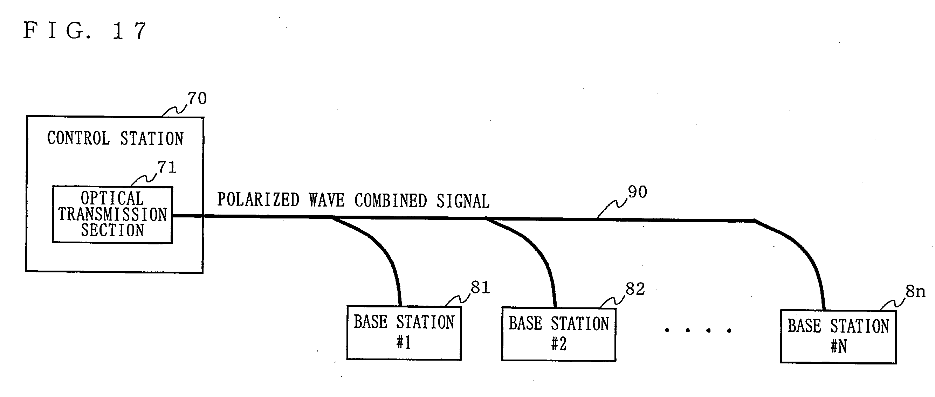

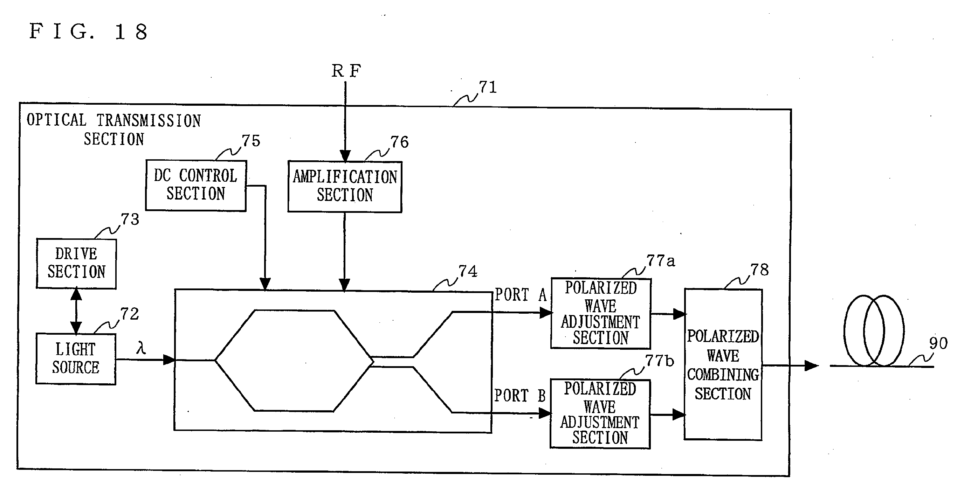

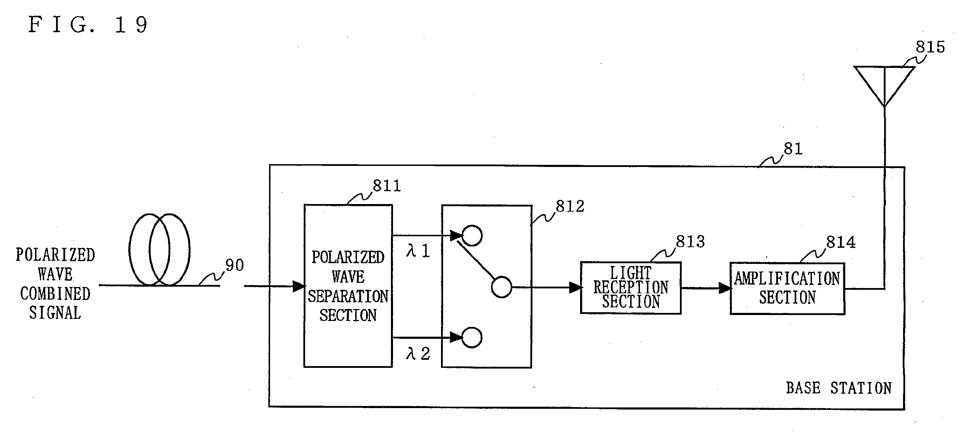

FIG. 17 is a diagram schematically showing a radio frequency optical transmission system according to a ninth embodiment of the present invention. In the radio frequency optical transmission system according to the ninth embodiment shown in FIG. 17, a control station 70 is connected to n base stations 81-8n by an optical transmission path which includes a single optical fiber 90. FIG. 18 is a block diagram showing a structure of an optical transmission section 71 provided in the control station 70. In FIG. 18, the optical transmission section 71 includes a light source 72, a drive section 73, an optical intensity modulation section 74, a DC control section 75, an amplification section 76, a first polarized wave adjustment section 77a, a second polarized wave adjustment section 77b, and a polarized wave combining section 78. FIG. 19 is a block diagram illustrating a structure of the base station 81. In FIG. 19, the base station 81 includes a polarized wave separation section 811, an input switching section 812, a light reception section 813, an amplification section 814, and an antenna 815. Other base stations 82 through 8n are configured in a manner similar to the base station 81, and therefore only the base station 81 is described in detail below.

In the optical transmission section 71, the light source 72 is controlled by the drive section 73 so as to output a predetermined optical signal. The amplification section 76 amplifies an externally-inputted radio frequency (RF) transmission signal to a desired level. The DC control section 75 controls a direct current bias voltage to be supplied to the optical intensity modulation section 74. The optical intensity modulation section 74 initially modulates the intensity of an optical signal outputted from the light source 72 with the RF transmission signal amplified by the amplification section 76. Then, the optical intensity modulation section 74 divides the optical signal, which has its intensity modulated, into two optical signals. The optical intensity modulation section 74 outputs one of the two optical signals to a port A (or a port B) without processing it, and the other optical signal is inverted and outputted to the port B (or the port A). Consequently, two optical signals, which are phase conjugated with respect to each other (i.e., 180° out of phase with each other), are outputted from the ports A and B. The first polarized wave adjustment section 77a adjusts a polarized wave of the optical signal outputted from the port A of the optical intensity modulation section 74. The second polarized wave adjustment section 77b adjusts a polarized wave of the optical signal outputted from the port B of the optical intensity modulation section 74. In this case, the first and second polarized wave adjustment sections 77a and 77b adjust the polarized waves of the optical signals so as to be perpendicular to each other. The polarized wave combining section 78 combines the optical signals adjusted by the first and second polarized wave adjustment sections 77a and 77b into a combined optical signal. The polarized wave combining section 78 transmits the combined optical signal via the optical fiber 90. The combined optical signal outputted from the polarized wave combining section 78 is transmitted through the optical fiber 90 to each of the bases 81 through 8n.

In the base station 81, the combined optical signal transmitted from the control station 70 through the optical fiber 90 is inputted into the polarized wave separation section 811. The polarized wave separation section 811 separates the received combined optical signal containing perpendicular polarized waves into optical signals having different polarized waves, and inputs each of the optical signals having different polarized waves into a corresponding one of input terminals of the input switching section 812. The input switching section 812 is an optical switch having two input terminals and one output terminal, for example, and selectively outputs one of the two optical signals inputted into the input terminals thereof, based on a distance between the control station 70 and the base station 81. The light reception section 813 receives the optical signal selectively outputted from the input switching section 812, and converts the received optical signal into a radio frequency signal. The amplification section 814 amplifies the radio frequency signal obtained by the light reception section 813 to a desired level. The amplified radio frequency signal is radiated into space from the antenna 815.

In order to solve the problem as described in the first embodiment, the radio frequency optical transmission system according to the ninth embodiment of the present invention includes the optical intensity modulation section 74 provided in the control station 70 and having a function of dividing an intensity modulated signal into two signals and a function of inverting the phase of the intensity modulated signal, as well as a function of modulating the intensity of an optical signal with a radio frequency signal. The optical intensity modulation section 74 outputs two phase-conjugated optical signals from two output ports. The ninth embodiment differs from the first embodiment in that a polarization beam combining scheme is used for reducing the number of optical fibers to one. As is apparent from the foregoing, also in the radio frequency optical transmission system according to the ninth embodiment, it is possible to obtain a signal having a radio frequency signal power intensity of 0 dB or more at any transmission distance (see FIG. 7).

As described above, in the radio frequency optical transmission system according to the ninth embodiment of the present invention, two phase-conjugated optical signals having different polarized waves are generated. The polarized waves of the two optical signals are adjusted and combined into a combined optical signal, and the generated combined optical signal is transmitted from the control station. Each base station receives the combined optical signal, and separates a predetermined one of the optical signals having different polarized waves from the received combined optical signal based on a transmission distance from the control station. Therefore, the base station is able to readily receive a radio frequency signal having a high power intensity without requiring considerably high adjustment accuracy.

(Tenth Embodiment)

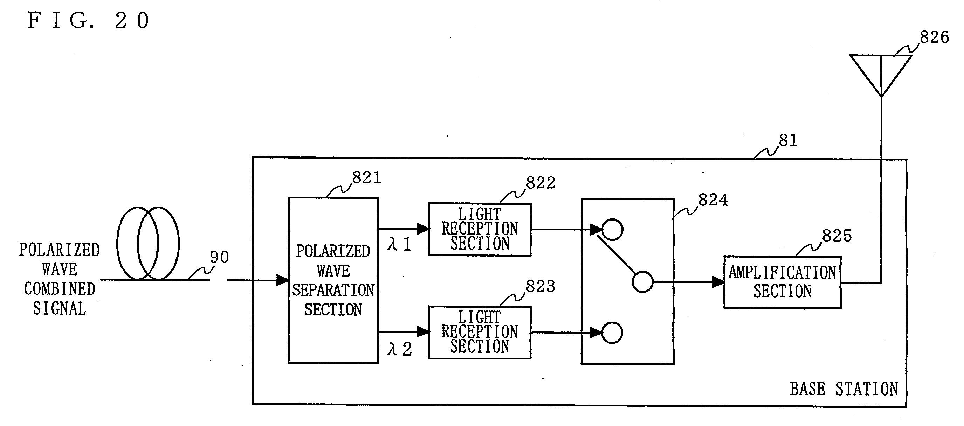

In a tenth embodiment, the base stations 81 through 8n used in the radio frequency optical transmission system according to the ninth embodiment are structured in a manner different from those shown in FIG. 19. FIG. 20 is a block diagram illustrating a structure of the base station 81 included in a radio frequency optical transmission system according to the tenth embodiment. In FIG. 20, the base station 81 includes a polarized wave separation section 821, a first light reception section 822, a second light reception section 823, an input switching section 824, an amplification section 825, and an antenna 826.

In the base station 81, a multiplexed optical signal transmitted from the control station 70 through the optical fiber 90 is inputted into the polarized wave separation section 821. The polarized wave separation section 821 separates the received multiplexed optical signal containing perpendicular polarized waves into optical signals having different polarized waves, and inputs each of the optical signals into a corresponding one of the first and second light reception sections 822 and 823. The first light reception section 822 converts the inputted optical signal into a radio frequency signal. Similarly, the second light reception section 823 converts the inputted optical signal into a radio frequency signal. The input switching section 824 selectively outputs one of the radio frequency signals obtained through conversion by the first and second light reception sections 822 and 823, based on a distance between the control station 70 and the base station 81. The amplification section 825 amplifies the radio frequency signal outputted from the input switching section 824 to a desired level. The amplified radio frequency signal is radiated into space from the antenna 826.

Note that although the tenth embodiment has been described with respect to a case where one amplification section 825 is provided between the input switching section 824 and the antenna 826, one or more amplification sections 825 can be provided both between the first light reception section 822 and the input switching section 824 and between the second light reception section 823 and the input switching section 824.

(Eleventh Embodiment)

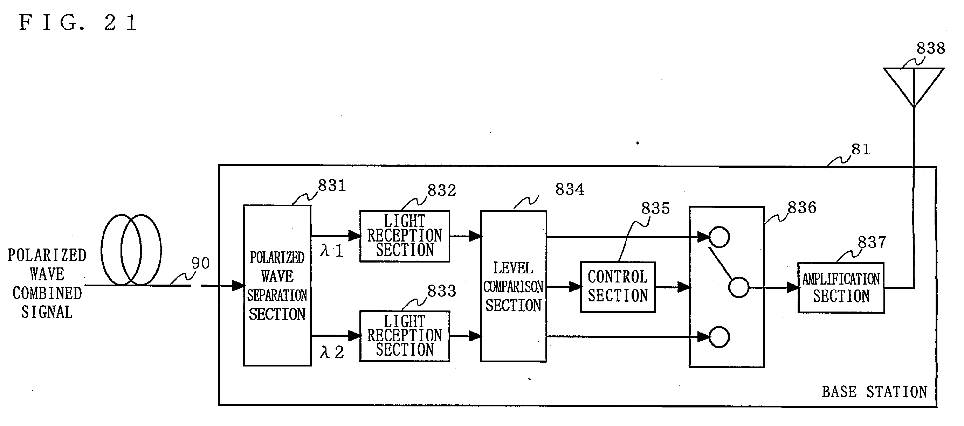

In an eleventh embodiment, the base stations 81 through 8n used in the radio frequency optical transmission system according to the ninth embodiment are structured in a manner different from those shown in FIGs. 19 and 20. FIG. 21 is a block diagram illustrating a structure of the base station 81 included in a radio frequency optical transmission system according to the eleventh embodiment. In FIG. 21, the base station 81 includes a polarized wave separation section 831, a first light reception section 832, a second light reception section 833, a level comparison section 834, a control section 835, an input switching section 836, an amplification section 837, and an antenna 838.

In the base station 81, a multiplexed optical signal transmitted from the control station 70 through the optical fiber 90 is inputted into the polarized wave separation section 831. The polarized wave separation section 831 separates the received multiplexed optical signal containing perpendicular polarized waves into optical signals having different polarized waves, and inputs each of the optical signals into a corresponding one of the first and second light reception sections 832 and 833. The first light reception section 832 converts the inputted optical signal into a radio frequency signal. Similarly, the second light reception section 833 converts the inputted optical signal into a radio frequency signal. The level comparison section 834 compares the radio frequency signals obtained through conversion by the first and second light reception sections 832 and 833 with respect to their power intensities. The control section 835 determines which one of the radio frequency signals has a greater power intensity based on a comparison result obtained by the level comparison section 834. The control section 835 then controls the input switching section 836 so as to output the radio frequency signal having a greater power intensity to the amplification section 837. The input switching section 836 receives each of the radio frequency signals obtained through conversion by the first and second light reception sections 832 and 833, and selectively outputs one of the radio frequency signals in accordance with an instruction given by the control section 835. The amplification section 837 amplifies the radio frequency signal outputted from the input switching section 836 to a desired level. The amplified radio frequency signal is radiated into space from the antenna 838.

In the above structure, the base station 81 is able to automatically select an optimum optical signal, i.e., a radio frequency signal having a high signal intensity. Note that although the eleventh embodiment has been described with respect to a case where one amplification section 837 is provided between the input switching section 836 and the antenna 838, one or more amplification sections 837 can be provided both between the first light reception section 832 and the input switching section 836 and between the second light reception section 833 and the input switching section 836.

(Twelfth Embodiment)

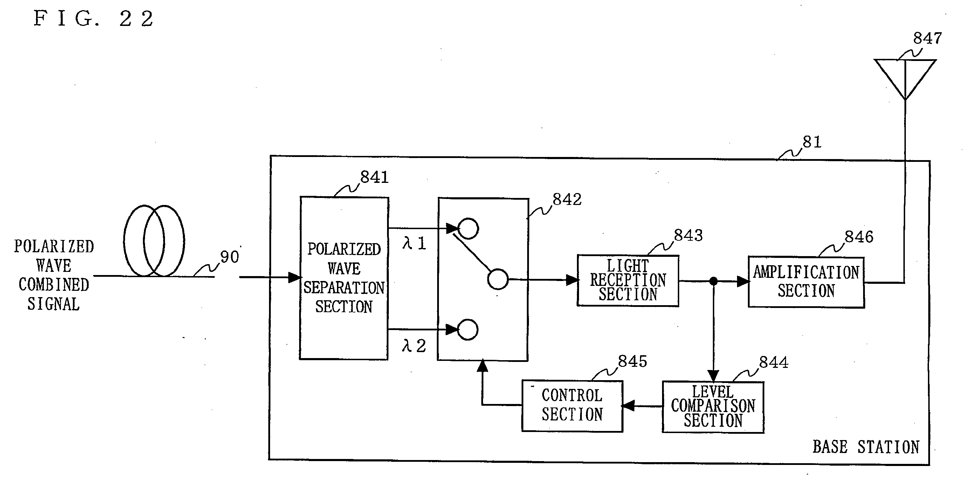

In a twelfth embodiment, the base stations 81 through 8n used in the radio frequency optical transmission system according to the ninth embodiment are structured in a manner different from those shown in FIGs. 19 through 21. FIG. 22 is a block diagram illustrating a structure of the base station 81 included in a radio frequency optical transmission system according to the twelfth embodiment. In FIG. 22, the base station 81 includes a polarized wave separation section 841, an input switching section 842, a light reception section 843, a level comparison section 844, a control section 845, an amplification section 846, and an antenna 847.

In the base station 81, a multiplexed optical signal transmitted from the control station 70 through the optical fiber 90 is inputted into the polarized wave separation section 841. The polarized wave separation section 841 separates the received multiplexed optical signal containing perpendicular polarized waves into optical signals having different polarized waves, and inputs each of the optical signals into a corresponding one of input terminals of the input switching section 842. The input switching section 842 selectively outputs one of the two optical signals having different polarized waves in accordance with an instruction given by the control section 845. Note that at the time when the base station is initially provided, an optical signal having a predetermined polarized wave is selected in accordance with default settings. The light reception section 843 receives the optical signal selectively outputted from the input switching section 842, and converts the received optical signal into a radio frequency signal. The level comparison section 844 detects a power intensity of the radio frequency signal obtained through conversion by the light reception section 843, and compares the detected power intensity with a reference value stored therein. As a result of comparison, if the detected power intensity is lower than the reference value, the level comparison section 844 instructs the control section 845 to switch the input switching section 842. Note that if the detected power intensity is higher than the reference value, the level comparison section 844 gives no instruction. The control section 845 switches the input switching section 842 in accordance with the instruction given by the level comparison section 844. The amplification section 846 receives the radio frequency signal obtained through conversion by the light reception section 843, and amplifies the received radio frequency signal to a desired level. The amplified radio frequency signal is radiated into space from the antenna 847.

In the above structure, the base station 81 is able to automatically select an optimum optical signal, i.e., a radio frequency signal having a high signal intensity. Note that although the twelfth embodiment has been described with respect to a case where one amplification section 846 is provided between the light reception section 843 and the antenna 847, one or more amplification sections 846 can be provided both between the input switching section 842 and the light reception section 843 and between the light reception section 843 and the level comparison section 844.

Note that each of the optical intensity modulation sections 14, 44, 74 respectively described in the first, fifth, and ninth embodiments is realized by providing a Mach-Zehnder interferometer on a crystal having an electrooptic effect (e.g., lithium niobate).

Further, the zero-dispersion wavelength of an optical fiber and the wavelength of a light source are not identical to each other. For example, it is conceivable to combine a 1.3 $\mu$m zero-dispersion optical fiber and a 1.55 $\mu$m light source or to combine a 1. 55 $\mu$m zero-dispersion optical fiber and a 1.3 $\mu$m light source. Recently, in particular, a broad wavelength band is considered for use in coarse wavelength-division multiplexing (CWDM) applications, and therefore there are a variety of possible combinations of the optical fiber and the light source, including combinations of an optical fiber and a light source which are intended for the same wavelength band.

Furthermore, although the first through twelfth embodiments have been described with respect to downlink optical transmission from the control station to the base station, the present invention provides a similar effect in the case of uplink optical transmission from the base station to the control station.

## INDUSTRIAL APPLICABILITY

The present invention is advantageous to, for example, a subcarrier optical transmission system in which a modulated radio frequency signal is optically transmitted, and is useful, in particular, in preventing a signal in a millimeter-wave band from being lost due to the influence of chromatic dispersion of the optical fiber.

## Claims

1.  A radio frequency optical transmission system for optically transmitting a radio frequency signal from a control station (10, 40, 70) to a plurality of base stations (21-2n, 51-5n, 81-8n) each being connected via an optical transmission path (31, 32, 60, 90) with the control station (10, 40, 70), wherein the control station (10, 40, 70) includes:

    a light source (12, 42a, 42b, 72) for outputting an optical signal; and
    an optical intensity modulation section (14, 44, 74) for modulating an intensity of the optical signal outputted from the light source (12, 42a, 42b, 72) with the radio frequency signal, and for generating two phase-conjugated optical signals which are 180° out of phase with each other based on the optical signal having its intensity modulated, **characterised in that** a signal power intensity is periodically attenuated at periodical transmission distances because of chromatic dispersion in the optical transmission path (31, 32, 60, 90), and
    wherein
    transmission distances between the control station (10, 40, 70) and the plurality of base stations (21-2n, 51-5n, 81-8n) are irregular and various; and
    the plurality of base stations (21-2n, 51-5n, 81-8n) each receive both of the two phase-conjugated optical signals transmitted in the predetermined transmission form from the control station (10, 40, 70) via the optical transmission path (31, 32, 60, 90), and selectively processes a one of the received two phase-conjugated optical signals which has the greater signal power intensity.

2. The radio frequency optical transmission system according to claim 1, wherein
the optical transmission path (31, 32, 60, 90) includes two optical fibers (31, 32); and
the plurality of base stations (21-2n) include:

an input switching section (211) for receiving the two phase-conjugated optical signals via the two optical fibers (31, 32), and selectively outputting a predetermined one of the received two phase-conjugated optical signals in accordance with a transmission distance to the control station (10, 40, 70); and
a light reception section (212) for converting the predetermined optical signal selectively outputted from the input switching section (211) into a radio frequency signal.

3. The radio frequency optical transmission system according to claim 1, wherein
the optical transmission path (31, 32, 60, 90) includes two optical fibers (31, 32); and
the plurality of base stations (21-2n) include:

a first light reception section (221) for receiving one of the two phase-conjugated optical signals via one of the two optical fibers (31), and converting the received optical signal into a radio frequency signal;
a second light reception section (222) for receiving another one of the two phase-conjugated optical signals via the other optical fiber (32), and converting the received optical signal into a radio frequency signal; and
an input switching section (223) for receiving the radio frequency signals respectively outputted from the first (221) and second light reception sections (222), and selectively outputting a predetermined one of the received radio frequency signal in accordance with a transmission distance to the control station (10, 40, 70).

4. The radio frequency optical transmission system according to claim 1, wherein
the light source (12, 42a, 42b, 72) includes:

a first light source (42a) for outputting an optical signal having a wavelength of $\lambda 1$; and
a second light source (42b) for outputting an optical signal having a wavelength of $\lambda 2$ different from the wavelength of $\lambda 1$; and

the control section further includes:

a first optical multiplexing section (47) for multiplexing the optical signal having the wavelength of $\lambda 1$ and the optical signal having the wavelength of $\lambda 2$ into a first multiplexed optical signal;
a first wavelength demultiplexing section (48a) for separating only the optical signal having the wavelength of $\lambda 1$ from one of the two phase-conjugated optical signals generated by the optical intensity modulation section (14, 44, 74);
a second wavelength demultiplexing section (48b) for separating only the optical signal having the wavelength of $\lambda 2$ from another one of the two phase-conjugated optical signals generated by the optical intensity modulation section (14, 44, 74); and
a second optical multiplexing section (49) for multiplexing the optical signal having the wavelength of $\lambda 1$ separated by the first wavelength demultiplexing section (48a) and the optical signal having the wavelength of $\lambda 2$ separated by the second wavelength demultiplexing section (48b) into a second multiplexed optical signal, and for transmitting the second multiplexed optical signal via the optical transmission path (60),
wherein the optical intensity modulation section (44) modulates an intensity of the multiplexed optical signal outputted from the first optical multiplexing section, instead of the optical signal outputted from the light source (42a), with the radio frequency signal.

5. The radio frequency optical transmission system according to claim 4, wherein the plurality of base stations (51-5n) include:

a wavelength demultiplexing section (511) for receiving the second multiplexed optical signal via the optical transmission path (60), and demultiplexing the second multiplexed optical signal into the optical signal having the wavelength of $\lambda 1$ and the optical signal having the wavelength of $\lambda 2$;
an input switching section (512) for receiving the optical signal having the wavelength of $\lambda 1$ and the optical

signal having the wavelength of λ2, and selectively outputting a predetermined one of the optical signal having the wavelength of λ1 and the optical signal having the wavelength of λ2 in accordance with a transmission distance to the control station (10, 40, 70); and

a light reception section (513) for converting the predetermined optical signal selectively outputted from the input switching section (512) into a radio frequency signal.

6. The radio frequency optical transmission system according to claim 4, wherein the plurality of base stations (51-5n) include:

a wavelength demultiplexing section (521) for receiving the second multiplexed optical signal via the optical transmission path (60), and demultiplexing the second multiplexed optical signal into the optical signal having the wavelength of λ1 and the optical signal having the wavelength of λ2;

a first light reception section (522) for receiving one of the optical signal having the wavelength of λ1 and the optical signal having the wavelength of λ2, and converting the received optical signal into a radio frequency signal;

a second light reception section (523) for receiving another one of the optical signal having the wavelength of λ1 and the optical signal having the wavelength of λ2, and converting the received optical signal into a radio frequency signal; and

an input switching section (524) for receiving the radio frequency signals respectively outputted from the first (522) and second light reception sections (523), and selectively outputting a predetermined one of the received radio frequency signals in accordance with a transmission distance to the control section.

7. The radio frequency optical transmission system according to claim 1, wherein the control station (10, 40, 70) further includes:

a first polarized wave adjustment section (77a) for adjusting a polarized wave of one of the two phase-conjugated optical signals generated by the optical intensity modulation section (74);

a second polarized wave adjustment section (77b) for adjusting a polarized wave of another one of the two phase-conjugated optical signals generated by the optical intensity modulation section (74), so as to be perpendicular to the polarized wave of the optical signal which has been adjusted by the first polarized wave adjustment section; and

a polarized wave combining section (78) for combining the optical signals having their polarized waves respectively adjusted by the first and second polarized wave adjustment sections into a combined optical signal, such that their polarized waves are kept perpendicular to each other, the polarized wave combining section transmitting the combined optical signal via the optical transmission path (90).

8. The radio frequency optical transmission system according to claim 7, wherein the plurality of base stations (81-8n) further include:

a polarized wave separation section (811) for receiving the combined optical signal via the optical transmission path (90), and separating the received combined optical signal into two phase-conjugated optical signals having their polarized waves perpendicular to each other;

an input switching section (812) for receiving the two phase-conjugated optical signals obtained through separation by the polarized wave separation section, and selectively outputting a predetermined one of the received two phase-conjugated optical signals in accordance with a transmission distance to the control section; and

a light reception section (813) for converting the optical signal selectively outputted from the input switching section (812) into a radio frequency signal.

9. The radio frequency optical transmission system according to claim 7, wherein the plurality of base stations (81-8n) include:

a polarized wave separation section (821) for receiving the combined optical signal via the optical transmission path (90), and separating the received combined optical signal into two phase-conjugated optical signals having their polarized waves perpendicular to each other;

a first light reception section (822) for receiving one of the two phase-conjugated optical signals having their polarized waves perpendicular to each other, and converting the received optical signal into a radio frequency signal;

a second light reception section (823) for receiving another one of the two phase-conjugated optical signals having their polarized waves perpendicular to each other, and converting the received optical signal into a radio frequency signal; and

an input switching section (824) for receiving the radio frequency signals respectively outputted from the first (822) and second light reception sections (823), and selectively outputting a predetermined one of the received radio frequency signals in accordance with a transmission distance to the control station (10, 40, 70).

10. The radio frequency optical transmission system according to any one of claims 1, 4 or 7, wherein the optical intensity modulation section (14, 44, 74) includes a Mach-Zehnder interferometer.

11. The radio frequency optical transmission system according to any one of claims 1, 4 or 7, wherein the optical intensity modulation section (14, 44, 74) is made of a crystal having an electrooptic effect.

12. The radio frequency optical transmission system according to claim 11, wherein the crystal having the electrooptic effect is lithium niobate.

13. The radio frequency optical transmission system according to any one of claims 1, 4 or 7, wherein the optical transmission path (31, 32, 60, 90) is an optical fiber, and a zero-dispersion wavelength range of the optical fiber is different from a wavelength range of the light source (12, 42a, 42b, 72).

14. The radio frequency optical transmission system according to claim 13, wherein the zero-dispersion wavelength range of the optical fiber is a 1.3 $\mu$m range, and the wavelength range of the light source (12, 42a, 42b, 72) is a 1.55 $\mu$m range.

15. A method for optically transmitting a radio frequency signal from a control station (10, 40, 70) to a plurality of base stations (21-2n, 51-5n, 81-8n), in which transmission distances from the control station to the base stations (21-2n, 51-5n, 81-8n) are irregular and various, the method comprising,:

by the control section:

modulating an intensity of a predetermined optical signal with the radio frequency signal;
generating two phase-conjugated optical signals which are 180° out of phase with each other based on the optical signal having its intensity modulated; **characterised in that** a signal power intensity is periodically attenuated at periodical transmission distances because of chromatic dispersion in the optical transmission path (31, 32, 60, 90), and
transmitting the generated two phase-conjugated optical signals in a predetermined transmission form via an optical transmission path (31, 32, 60, 90); and
by each of the plurality of base stations (21-2n, 51-5n, 81-8n) :

receiving both of the two phase-conjugated optical signals transmitted in the predetermined transmission form via the optical transmission path (31, 32, 60, 90);
selecting one of the received two phase-conjugated optical signals which has the greater signal power intensity.; and
converting the selected optical signal into the radio frequency signal.


**Patentansprüche**

1. Optisches Radiofrequenz-Übertragungssystem zur optischen Übertragung eines Radiofrequenzsignals von einer Kontrollstation (10, 40, 70) zu einer Vielzahl von Basisstationen (21-2n, 51-5n, 81-8n), welche jeweils über einen optischen Übertragungspfad (31, 32, 60, 90) mit der Kontrollstation (10, 40, 70) verbunden sind, wobei die Kontrollstation (10, 40, 70) enthält:

eine Lichtquelle (12, 42a, 42b, 72) zum Ausgeben eines optischen Signals; und
einen optischen Intensitätsmodulationsabschnitt (14, 44, 74) zum Modulieren einer Intensität eines von der Lichtquelle (12, 42a, 42b, 72) ausgegebenen optischen Signals mit dem Radiofrequenzsignal, und zum Erzeugen von zwei Phasen-konjugierten optischen Signalen, welche um 180° zueinander phasenverschoben sind, auf Basis des optischen Signals mit der modulierten Intensität,
**dadurch gekennzeichnet, dass** eine Signalleistungsintensität bei periodischen Übertragungsabständen auf Grund chromatischer Dispersion im optischen Übertragungspfad (31, 32, 60, 90) periodisch gedämpft wird, und

wobei

Übertragungsabstände zwischen der Kontrollstation (10, 40, 70) und die Vielzahl von Basisstationen (21-2n, 51-5n, 81-8n) unregelmäßig und verschieden sind; und

jede der Vielzahl von Basisstationen (21-2n, 51-5n, 81-8n) beide der zwei Phasen-konjugierten optischen Signale empfängt, welche in der vorbestimmten Übertragungsform von der Kontrollstation (10, 40, 70) über den optischen Übertragungspfad (31, 32, 60, 90) übertragen werden, und selektiv eines der beiden empfangenen Phasen-konjugierten optischen Signale verarbeitet, welches die größere Signalleistungsintensität aufweist.

2. Optisches Radiofrequenz-Übertragungssystem nach Anspruch 1, wobei
der optische Übertragungspfad (31, 23, 60, 90) zwei optische Fasern (31, 32) enthält; und
die Vielzahl von Basisstationen (21-2n) enthält:

einen Eingabeschaltabschnitt (211) zum Empfangen der beiden Phasen-konjugierten optischen Signale über die beiden optischen Fasern (31, 32), und zum selektiven Ausgeben eines vorbestimmten von den beiden empfangenen Phasen-konjugierten optischen Signalen in Übereinstimmung mit einem Übertragungsabstand zur Kontrollstation (10, 40, 70); und

einen Lichtempfangsabschnitt (212) zum Wandeln des vorbestimmten optischen Signals, welches selektiv vom Eingabeschaltabschnitt (211) ausgegeben wird, in ein Radiofrequenzsignal.

3. Optisches Radiofrequenz-Übertragungssystem nach Anspruch 1, wobei
der optische Übertragungspfad (31, 32, 60, 90) zwei optische Fasern enthält; und
die Vielzahl von Basisstationen (21-2n) enthält:

einen ersten Lichtempfangsabschnitt (221) zum Empfangen eines der beiden Phasen-konjugierten optischen Signale über eine der beiden optischen Fasern (31), und zum Wandeln des empfangenen optischen Signals in ein Radiofrequenzsignal;

einen zweiten Lichtempfangsabschnitt (222) zum Empfangen eines anderen von den beiden Phasen-konjugierten optischen Signale über die andere optische Faser (32), und zum Wandeln des empfangenen optischen Signals in ein Radiofrequenzsignal; und

einen Eingabeschaltabschnitt (223) zum Empfangen der Radiofrequenzsignale, welche von den ersten (221) bzw. zweiten Lichtempfangsabschnitten (222) ausgegeben werden, und zum selektiven Ausgeben eines vorbestimmten von den empfangenen Radiofrequenzsignalen in Übereinstimmung mit einem Übertragungsabstand zur Kontrollstation (10, 40, 70).

4. Optisches Radiofrequenz-Übertragungssystem nach Anspruch 1, wobei
die Lichtquelle (12, 42a, 42b, 72) enthält:

eine erste Lichtquelle (42a) zum Ausgeben eines optischen Signals mit einer Wellenlänge Al; und
eine zweite Lichtquelle (42b) zum Ausgeben eines optischen Signals mit einer von der Wellenlänge $\lambda 1$ unterschiedlichen Wellenlänge $\lambda 2$; und

der Kontrollabschnitt weiterhin enthält:

einen ersten optischen Multiplexabschnitt (47) zum Multiplexen des optischen Signals mit der Wellenlänge $\lambda 1$ und des optischen Signals mit der Wellenlänge $\lambda 2$ in ein erstes gemultiplextes optisches Signal;

einen ersten Wellenlängen-Demultiplex-Abschnitt (48a) zum Abtrennen nur des optischen Signals mit der Wellenlänge $\lambda 1$ von einem der beiden Phasen-konjugierten optischen Signale, welche durch den optischen Intensitätsmodulationsabschnitt (14, 44, 74) erzeugt werden;

einen zweiten Wellenlängen-Demultiplex-Abschnitt (48b) zum Abtrennen nur des optischen Signals mit der Wellenlänge $\lambda 2$ vom anderen von den beiden Phasen-konjugierten optischen Signalen, welche durch den optischen Intensitätsmodulationsabschnitt (14, 44, 74) erzeugt werden; und

eine zweiten optischen Multiplexabschnitt (49) zum Multiplexen des optischen Signals mit der Wellenlänge $\lambda 1$, welches durch den ersten Wellenlängen-Demultiplex-Abschnitt (48a) abgetrennt wird, und des optischen Signals mit der Wellenlänge $\lambda 2$, welches durch den zweiten Wellenlängen-Demultiplex-Abschnitt (48b) abgetrennt wird, in ein zweites gemultiplextes optisches Signal, und zum Übertragen des zweiten gemultiplexten optischen Signals über den optischen Übertragungspfad (60),

wobei der optische Intensitätsmodulationsabschnitt (44) eine Intensität des gemultiplexten optischen Signals, welches vom ersten optischen Multiplexabschnitt ausgegeben wird, anstelle des von der Lichtquelle (42a) ausgegebenen optischen Signals mit dem Radiofrequenzsignal moduliert.

5. Optisches Radiofrequenz-Übertragungssystem nach Anspruch 4, wobei die Vielzahl von Basisstationen (51-5n) enthält:

einen Wellenlängen-Demultiplex-Abschnitt (511) zum Empfangen des zweiten gemultiplexten optischen Signals über den optischen Übertragungspfad (60), und zum Demultiplexen des zweiten gemultiplexten optischen Signals in das optische Signal mit der Wellenlänge λ1 und das optische Signal mit der Wellenlänge λ2;
einen Eingabeschaltabschnitt (512) zum Empfangen des optischen Signals mit der Wellenlänge λ1 und des optischen Signals mit der Wellenlänge λ2, und zum selektiven Ausgeben eines vorbestimmten vom optischen Signal mit der Wellenlänge λ1 und vom optischen Signal mit der Wellenlänge λ2 in Übereinstimmung mit einem Übertragungsabstand zur Kontrollstation (10, 40, 70); und
einen Lichtempfangsabschnitt (513) zum Wandeln des vorbestimmten optischen Signals, welches selektiv vom Eingabeschaltabschnitt (512) ausgegeben wird, in ein Radiofrequenzsignal.

6. Optisches Radiofrequenz-Übertragungssystem nach Anspruch 4, wobei die Vielzahl von Basisstationen (51-5n) enthält:

einen Wellenlängen-Demultiplex-Abschnitt (521) zum Empfangen es zweiten gemultiplexten optischen Signals über den optischen Übertragungspfad (60), und zum Demultiplexen des zweiten gemultiplexten optischen Signals in das optische Signal mit der Wellenlänge λ1 und das optische Signal mit der Wellenlänge λ2;
einen ersten Lichtempfangsabschnitt (522) zum Empfangen eines vom optischen Signal mit der Wellenlänge λ1 und vom optischen Signal mit der Wellenlänge λ2, und zum Wandeln des empfangenen optischen Signals in ein Radiofrequenzsignal;
einen zweiten Lichtempfangsabschnitt (523) zum Empfangen des anderen vom optischen Signal mit der Wellenlänge λ1 und vom optischen Signal mit der Wellenlänge λ2, und zum Wandeln des empfangenen optischen Signals in ein Radiofrequenzsignal; und
einen Eingabeschaltabschnitt (524) zum Empfangen der Radiofrequenzsignale, welche von den ersten (522) bzw. zweiten Lichtempfangsabschnitten (523) ausgegeben werden, und zum selektiven Ausgeben eines vorbestimmten der empfangenen Radiofrequenzsignale in Übereinstimmung mit einem Übertragungsabstand zum Kontrollabschnitt.

7. Optisches Radiofrequenz-Übertragungssystem nach Anspruch 1, wobei Kontrollstation (10, 40, 70) weiterhin enthält:

einen ersten polarisierten Welleneinstellabschnitt (77a) zum Einstellen einer polarisierten Welle von einem der beiden Phasen-konjugierten optischen Signale, welche durch den optischen Intensitätsmodulationsabschnitt (74) erzeugt werden;
einen zweiten polarisierten Welleneinstellabschnitt (77b) zum Einstellen einer polarisierten Welle vom anderen von den beiden Phasen-konjugierten optischen Signalen, welche durch den optischen Intensitätsmodulationsabschnitt (74) erzeugt werden, um mit der polarisierten Welle des optischen Signals, welches durch den ersten polarisierten Welleneinstellabschnitt eingestellt worden ist, senkrecht zu stehen; und
einen polarisierten Wellenkombinationsabschnitt (78) zum Kombinieren der optischen Signale mit deren polarisierten Wellen, welche durch die ersten bzw. zweiten polarisierten Welleneinstellabschnitte als ein kombiniertes optisches Signal eingestellt werden, so dass deren polarisierte Wellen senkrecht zueinander gehalten werden, wobei der polarisierte Wellenkombinationsabschnitt das kombinierte optische Signal über den optischen Übertragungspfad (90) überträgt.

8. Optisches Radiofrequenz-Übertragungssystem nach Anspruch 7, wobei die Vielzahl der Basisstationen (81-9n) weiterhin enthält:

einen polarisierten Wellenabtrennabschnitt (811) zum Empfangen des kombinierten optischen Signals über den optischen Übertragungspfad (90), und zum Abtrennen des empfangenen kombinierten optischen Signals in zwei Phasen-konjugierte optische Signale, deren polarisierte Wellen senkrecht aufeinander stehen;
einen Eingabeschaltabschnitt (812) zum Empfangen der beiden Phasen-konjugierten optischen Signale, welche durch Abtrennen durch den polarisierten Wellenabtrennabschnitt erhalten werden, und zum selektiven Ausgeben eines vorbestimmten von den beiden empfangenen Phasen-konjugierten optischen Signalen in Übereinstimmung mit einem Übertragungsabstand zum Kontrollabschnitt; und
eine Lichtempfangsabschnitt (813) zum Wandeln des optischen Signals, welches selektiv vom Eingabeschaltabschnitt (812) ausgegeben wird, in ein Radiofrequenzsignal.

9. Optisches Radiofrequenz-Übertragungssystem nach Anspruch 7, wobei die Vielzahl der Basisstationen (81-8n) weiterhin enthält:

einen polarisierten Wellenabtrennabschnitt (821) zum Empfangen des kombinierten optischen Signals über den optischen Übertragungspfad (90), und zum Abtrennen des empfangenen kombinierten optischen Signals in zwei Phasen-konjugierte optische Signale, deren polarisierte Wellen senkrecht aufeinander stehen;
einen ersten Lichtempfangsabschnitt (822) zum Empfangen eines der beiden Phasen-konjugierten optischen Signale, deren polarisierte Wellen senkrecht aufeinander stehen, und zum Wandeln des empfangenen optischen Signals in ein Radiofrequenzsignal;
einen zweiten Lichtempfangsabschnitt (823) zum Empfangen des anderen von den beiden Phasen-konjugierten optischen Signalen, deren polarisierte Wellen senkrecht aufeinander stehen, und zum Wandeln des empfangenen optischen Signals in ein Radiofrequenzsignal; und
einen Eingabeschaltabschnitt (824) zum Empfangen der Radiofrequenzsignale, welche von den ersten (822) bzw. zweiten Lichtempfangsabschnitten (823) ausgegeben werden, und zum selektiven Ausgeben eines vorbestimmten der empfangenen Radiofrequenzsignale in Übereinstimmung mit einem Übertragungsabstand zur Kontrollstation (10, 40, 70).

10. Optisches Radiofrequenz-Übertragungssystem nach einem der Ansprüche 1, 4 oder 7, wobei der optische Intensitätsmodulationsabschnitt (14, 44, 74) ein Mach-Zehnder-Interferometer enthält.

11. Optisches Radiofrequenz-Übertragungssystem nach einem der Ansprüche 1, 4 oder 7, wobei der optische Intensitätsmodulationsabschnitt (14, 44, 74) aus einem Kristall mit einem elektrooptischen Effekt hergestellt ist.

12. Optisches Radiofrequenz-Übertragungssystem nach Anspruch 11, wobei der Kristall mit dem elektrooptischen Effekt ein Lithiumniobat ist.

13. Optisches Radiofrequenz-Übertragungssystem nach einem der Ansprüche 1, 4 oder 7, wobei der optische Übertragungspfad (31, 32, 60, 90) eine optische Faser ist, und ein Null-Dispersions-Wellenlängenbereich der optischen Faser sich von einem Wellenlängenbereich der Lichtquelle (12, 42a, 42b, 72) unterscheidet.

14. Optisches Radiofrequenz-Übertragungssystem nach Anspruch 13, wobei der Null-Dispersions-Wellenlängenbereich der optischen Faser ein 1,3 $\mu$m-Bereich ist, und der Wellenlängenbereich der Lichtquelle (12, 42a, 42b, 72) ein 1,55 $\mu$m-Bereich ist.

15. Verfahren zum optischen Übertragen eines Radiofrequenzsignals von einer Kontrollstation (10, 40, 70) zu einer Vielzahl von Basisstationen (21-2n, 51-5n, 81-8n), bei welchen der Übertragungsabstand von der Kontrollstation zu den Basisstationen (21-2n, 51-5n, 81-8n) unregelmäßig und verschieden sind, wobei das Verfahren umfasst,:

durch den Kontrollabschnitt:

Modulieren einer Intensität eines vorbestimmten optischen Signals mit dem Radiofrequenzsignal;
Erzeugen zweier Phasen-konjugierter optischer Signale, welche um 180° zueinander phasenverschoben sind, auf Basis des optischen Signals mit der modulierten Intensität,
**dadurch gekennzeichnet, dass** eine Signalleistungsintensität bei periodischen Übertragungsabständen auf Grund chromatischer Dispersion im optischen Übertragungspfad (31, 32, 60, 90) periodisch gedämpft wird; und
Übertragen der beiden erzeugten Phasen-konjugierten optischen Signale in einer vorbestimmten Übertragungsform über einen optischen Übertragungspfad (31, 32, 60, 90); und
durch jede der Vielzahl von Basisstationen (21-2n, 51-5n, 81-8n):

Empfangen beider der zwei Phasen-konjugierten optischen Signale, welche in der vorbestimmten Übertragungsform über den optischen Übertragungspfad (31, 32, 60, 90) übertragen werden;
Auswählen eines der beiden empfangenen Phasen-konjugierten optischen Signale, welches die größere Signalleistungsintensität aufweist; und
Wandeln des ausgewählten optischen Signals in das Radiofrequenzsignal.

**Revendications**

1. Système de transmission optique de radiofréquences pour la transmission optique d'un signal de radiofréquences d'une station de commande (10, 40, 70) à une pluralité de stations de base (21-2n, 51-5n, 81-8n), chacune étant connectée via un chemin de transmission optique (31, 32, 60, 90) avec la station de commande (10, 40, 70), où la station de commande (10, 40, 70) comporte:

   une source lumineuse (12, 42a, 42b, 72) pour délivrer en sortie un signal optique; et
   une section de modulation d'intensité optique (14, 44, 74) pour moduler une intensité du signal optique délivré en sortie de la source lumineuse (12, 42a, 42b, 72) avec le signal de radiofréquences, et pour générer deux signaux optiques à conjugaison de phase qui sont déphasés l'un par rapport à l'autre de 180° sur la base du signal optique ayant son intensité modulée,
   **caractérisé en ce qu'**une intensité de puissance de signal est périodiquement atténuée à des distances de transmission périodiques à cause d'une dispersion chromatique dans le chemin de transmission optique (31, 32, 60, 90), et
   et dans lequel
   les distances de transmission entre la station de commande (10, 40, 70) et la pluralité de stations de base (21-2n, 51-5n, 81-8n) sont irrégulières et diverses; et
   chacune de la pluralité de stations de base (21-2n, 51-5n, 81-8n) reçoit les deux signaux optiques à conjugaison de phase transmis sous la forme de transmission prédéterminée à partir de la station de commande (10, 40, 70) via le chemin de transmission optique (31, 32, 60, 90), et traite de manière sélective l'un des deux signaux optiques à conjugaison de phase reçus qui présente la plus grande intensité de puissance de signal.

2. Système de transmission optique de radiofréquences selon la revendication 1, dans lequel
   le chemin de transmission optique (31, 32, 60, 90) comporte deux fibres optiques (31, 32); et
   la pluralité de stations de base (21-2n) comportent:

   une section de commutation d'entrée (211) destinée à recevoir les deux signaux optiques à conjugaison de phase via les deux fibres optiques (31, 32), et à délivrer en sortie de manière sélective un signal prédéterminé des deux signaux optiques à conjugaison de phase reçus conformément à une distance de transmission à la station de commande (10, 40, 70); et
   une section de réception de lumière (212) destinée à convertir le signal optique prédéterminé délivré en sortie de manière sélective à partir de la section de commutation d'entrée (211) en signal de radiofréquences.

3. Système de transmission optique de radiofréquences selon la revendication 1, dans lequel
   le chemin de transmission optique (31, 32, 60, 90) comporte deux fibres optiques (31, 32); et
   la pluralité de stations de base (21-2n) comportent:

   une première section de réception de lumière (221) destinée à recevoir l'un des deux signaux optiques à conjugaison de phase via l'une des deux fibres optiques (31), et à convertir le signal optique reçu en signal de radiofréquences;
   une deuxième section de réception de lumière (222) destinée à recevoir un autre des deux signaux optiques à conjugaison de phase via l'autre fibre optique (32), et à convertir le signal optique reçu en signal de radiofréquences; et
   une section de commutation d'entrée (223) destinée à recevoir les signaux de radiofréquences délivrés en sortie respectivement à partir des première (221) et deuxième (222) sections de réception de lumière, et à délivrer en sortie de manière sélective un signal prédéterminé du signal de radiofréquences reçu conformément à une distance de transmission à la station de commande (10, 40, 70).

4. Système de transmission optique de radiofréquences selon la revendication 1, dans lequel
   la source lumineuse (12, 42a, 42b, 72) comporte:

   une première source lumineuse (42a) destinée à délivrer en sortie un signal optique ayant une longueur d'onde de λ1; et
   une deuxième source lumineuse (42b) destinée à délivrer en sortie un signal optique ayant une longueur d'onde de λ2 différente de la longueur d'onde de λ1; et

   la section de commande comporte en outre:

une première section de multiplexage optique (47) destinée à multiplexer le signal optique ayant la longueur d'onde de λ1 et le signal optique ayant la longueur d'onde de λ2 en un premier signal optique multiplexé;

une première section de démultiplexage de longueur d'onde (48a) destinée à séparer uniquement le signal optique ayant la longueur d'onde de λ1 de l'un des deux signaux optiques à conjugaison de phase générés par la section de modulation d'intensité optique (14, 44, 74);

une deuxième section de démultiplexage de longueur d'onde (48b) destinée à séparer uniquement le signal optique ayant la longueur d'onde de λ2 de l'autre des deux signaux optiques à conjugaison de phase générés par la section de modulation d'intensité optique (14, 44, 74); et

une deuxième section de multiplexage optique (49) destinée à multiplexer le signal optique ayant la longueur d'onde de λ1 séparée par la première section de démultiplexage de longueur d'onde (48a) et le signal optique ayant la longueur d'onde de λ2 séparée par la deuxième section de démultiplexage de longueur d'onde (48b) en un deuxième signal optique multiplexé, et à transmettre le deuxième signal optique multiplexé via le chemin de transmission optique (60),

dans lequel la section de modulation d'intensité optique (44) module une intensité du signal optique multiplexé délivré en sortie à partir de la première section de multiplexage optique, au lieu du signal optique délivré en sortie à partir de la source lumineuse (42a), avec le signal de radiofréquences.

5. Système de transmission optique de radiofréquences selon la revendication 4, dans lequel la pluralité de stations de base (51-5n) comportent:

une section de démultiplexage de longueur d'onde (511) destinée à recevoir le deuxième signal optique multiplexé via le chemin de transmission optique (60), et à démultiplexer le deuxième signal optique multiplexé en signal optique ayant la longueur d'onde de λ1 et en signal optique ayant la longueur d'onde de λ2;

une section de commutation d'entrée (512) destinée à recevoir le signal optique ayant la longueur d'onde de λ1 et le signal optique ayant la longueur d'onde de λ2, et à délivrer en sortie de manière sélective un signal prédéterminé du signal optique ayant la longueur d'onde de λ1 et du signal optique ayant la longueur d'onde de λ2 conformément à une distance de transmission à la station de commande (10, 40, 70); et

une section de réception de lumière (513) destinée à convertir le signal optique prédéterminé délivré en sortie de manière sélective à partir de la section de commutation d'entrée (512) en signal de radiofréquences.

6. Système de transmission optique de radiofréquences selon la revendication 4, dans lequel la pluralité de stations de base (51-5n) comportent:

une section de démultiplexage de longueur d'onde (521) destinée à recevoir le deuxième signal optique multiplexé via le chemin de transmission optique (60), et à démultiplexer le deuxième signal optique multiplexé en signal optique ayant la longueur d'onde de λ1 et le signal optique ayant la longueur d'onde de λ2;

une première section de réception de lumière (522) destinée à recevoir l'un du signal optique ayant la longueur d'onde de λ1 et du signal optique ayant La longueur d'onde de λ2, et à convertir le signal optique reçu en signal de radiofréquences;

une deuxième section de réception de lumière (523) destinée à recevoir un autre du signal optique ayant la longueur d'onde de λ1 et du signal optique ayant la longueur d'onde de λ2, et à convertir le signal optique reçu en signal de radiofréquences; et

une section de commutation d'entrée (524) destinée à recevoir les signaux de radiofréquences délivrés en sortie respectivement à partir des première (522) et deuxième (523) sections de réception de lumière, et à délivrer en sortie de manière sélective un signal prédéterminé des signaux de radiofréquences reçus conformément à une distance de transmission à la section de commande.

7. Système de transmission optique de radiofréquences selon la revendication 1, dans lequel la station de commande (10, 40, 70) comporte en outre:

une première section de réglage d'onde polarisée (77a) destinée à régler une onde polarisée de l'un des deux signaux optiques à conjugaison de phase générés par la section de modulation d'intensité optique (74);

une deuxième section de réglage d'onde polarisée (77b) destinée à régler une onde polarisée d'un autre des deux signaux optiques à conjugaison de phase générés par la section de modulation d'intensité optique (74), de manière à être perpendiculaire à l'onde polarisée du signal optique qui a été réglée par la première section de réglage d'onde polarisée; et

une section de combinaison d'onde polarisée (78) destinée à combiner les signaux optiques ayant leurs ondes polarisées respectivement réglées par les première et deuxième sections de réglage d'onde polarisée en signal optique combiné, de telle sorte que leurs ondes polarisées soient maintenues perpendiculaires l'une à l'autre, la section de combinaison d'onde polarisée transmettant le signal optique combiné via le chemin de transmission optique (90).

8. Système de transmission optique de radiofréquences selon la revendication 7, dans lequel la pluralité de stations de base (81-8n) comporte en outre:

une section de séparation d'onde polarisée (811) destinée à recevoir le signal optique combiné via le chemin de transmission optique (90), et à séparer le signal optique combiné reçu en deux signaux optiques à conjugaison de phase ayant leurs ondes polarisées perpendiculaires l'une à l'autre;
une section de commutation d'entrée (812) destinée à recevoir les deux signaux optiques à conjugaison de phase obtenus par séparation par la section de séparation d'onde polarisée, et à délivrer en sortie de manière sélective un signal prédéterminé des deux signaux optiques à conjugaison de phase reçus conformément à une distance de transmission à la section de commande; et
une section de réception de lumière (813) destinée à convertir le signal optique délivré en sortie de manière sélective à partir de la section de commutation d'entrée (812) en signal de radiofréquences.

9. Système de transmission optique de radiofréquences selon la revendication 7, dans lequel la pluralité de stations de base (81-8n) comportent:

une section de séparation d'onde polarisée (821) destinée à recevoir le signal optique combiné via le chemin de transmission optique (90), et à séparer le signal optique combiné reçu en deux signaux optiques à conjugaison de phase ayant leurs ondes polarisées perpendiculaires l'une à l'autre;
une première section de réception de lumière (822) destinée à recevoir l'un des deux signaux optiques à conjugaison de phase ayant leurs ondes polarisées perpendiculaires l'une à l'autre, et à convertir le signal optique reçu en signal de radiofréquences;
une deuxième section de réception de lumière (823) destinée à recevoir un autre des deux signaux optiques à conjugaison de phase ayant leurs ondes polarisées perpendiculaires l'une à l'autre, et à convertir le signal optique reçu en signal de radiofréquences; et
une section de commutation d'entrée (824) destinée à recevoir les signaux de radiofréquences délivrés en sortie respectivement à partir des première (822) et deuxième (823) sections de réception de lumière, et à délivrer en sortie de manière sélective un signal prédéterminé des signaux de radiofréquences reçus conformément à une distance de transmission à la station de commande (10, 40, 70).

10. Système de transmission optique de radiofréquences selon l'une quelconque des revendications 1, 4 ou 7, dans lequel la section de modulation d'intensité optique (14, 44, 74) comporte un interféromètre de Mach-Zehnder.

11. Système de transmission optique de radiofréquences selon l'une quelconque des revendications 1, 4 ou 7, dans lequel la section de modulation d'intensité optique (14, 44, 74) est faite d'un cristal ayant un effet électro-optique.

12. Système de transmission optique de radiofréquences selon la revendication 11, dans lequel le cristal ayant l'effet électro-optique est le niobate de lithium.

13. Système de transmission optique de radiofréquences selon l'une quelconque des revendications 1, 4 ou 7, dans lequel le chemin de transmission optique (31, 32, 60, 90) est une fibre optique, et une plage de longueur d'onde de dispersion nulle de la fibre optique est différente d'une plage de longueur d'onde de la source lumineuse (12, 42a, 42b, 72).

14. Système de transmission optique de radiofréquences selon la revendication 13, dans lequel la plage de longueur d'onde de dispersion nulle de la fibre optique est une plage de 1,3 $\mu$m, et la plage de longueur d'onde de la source lumineuse (12, 42a, 42b, 72) est une plage de 1,55 $\mu$m.

15. Procédé de transmission optique d'un signal de radiofréquences à partir d'une station de commande (10, 40, 70) à une pluralité de stations de base (21-2n, 51-5n, 81-8n), dans lequel les distances de transmission de la station de commande aux stations de base (21-2n, 51-5n, 81-8n) sont irrégulières et diverses, le procédé comprenant le fait, par la section de commande:

de moduler une intensité d'un signal optique prédéterminé avec le signal de radiofréquences;

de générer deux signaux optiques à conjugaison de phase qui sont déphasés l'un par rapport à l'autre de 180° sur la base du signal optique ayant son intensité modulée;

**caractérisé en ce qu'**une intensité de puissance de signal est périodiquement atténuée à des distances de transmission périodiques à cause d'une dispersion chromatique dans le chemin de transmission optique (31, 32, 60, 90), et

de transmettre les deux signaux optiques à conjugaison de phase générés sous forme de transmission prédéterminée via un chemin de transmission optique (31, 32, 60, 90); et

par chacune de la pluralité de stations de base (21-2n, 51-5n, 81-8n):

de recevoir les deux signaux optiques à conjugaison de phase transmis sous la forme de transmission prédéterminée via le chemin de transmission optique (31, 32, 60, 90);

de choisir l'un des deux signaux optiques à conjugaison de phase reçus qui présente la plus grande intensité de puissance de signal; et

de convertir le signal optique choisi en signal de radiofréquences.

FIG. 1

CONTROL STATION 10

OPTICAL TRANSMISSION SECTION 11

31 32

BASE STATION #1 21

BASE STATION #2 22

· · · · ·

BASE STATION #N 2n

EP 1 639 727 B1

F I G. 2

RF

OPTICAL TRANSMISSION
SECTION                                                    11

DC CONTROL
SECTION                    15

AMPLIFICATION
SECTION                    16

DRIVE
SECTION                    13

LIGHT
SOURCE                     12

14

PORT A                     31

PORT B                     32

F I G. 3

214

21

BASE STATION

211

212
LIGHT RECEPTION SECTION

213
AMPLIFICATION SECTION

PORT A

31

PORT B

32

FIG. 4

F I G. 5

OPTICAL
SIGNAL
INTENSITY

BIAS VOLTAGE

V a          V b

EP 1 639 727 B1

FIG. 6

EP 1 639 727 B1

FIG. 7

FIG. 8

EP 1 639 727 B1

225

21

PORT A ⟿31

LIGHT
RECEPTION
SECTION
⟿221

223

224

AMPLIFICATION
SECTION

PORT B ⟿32

LIGHT
RECEPTION
SECTION
⟿222

BASE STATION

EP 1 639 727 B1

FIG. 10

BASE STATION

PORT A — 31

PORT B — 32

241

242 LIGHT RECEPTION SECTION

245 AMPLIFICATION SECTION

244 CONTROL SECTION

243 LEVEL COMPARISON SECTION

21

246

FIG. 11

CONTROL STATION `40`

OPTICAL TRANSMISSION SECTION `41`

WAVELENGTH MULTIPLEXED SIGNAL `60`

BASE STATION #1 `51`

BASE STATION #2 `52`

. . . .

BASE STATION #N `5n`

EP 1 639 727 B1

FIG. 12

RF

OPTICAL TRANSMISSION SECTION

41

45 DC CONTROL SECTION

46 AMPLIFICATION SECTION

43a DRIVE SECTION

42a LIGHT SOURCE    λ1

47 WAVELENGTH MULTIPLEXING SECTION

44

PORT A

48a WAVELENGTH DEMULTIPLEXING SECTION

49 OPTICAL MULTIPLEXING SECTION

42b LIGHT SOURCE    λ2

43b DRIVE SECTION

PORT B

48b WAVELENGTH DEMULTIPLEXING SECTION

60

EP 1 639 727 B1

FIG. 13

EP 1 639 727 B1

F I G. 1 4

WAVELENGTH
MULTIPLEXED
SIGNAL
(λ1, λ2)

60

521
WAVELENGTH
DEMULTIPLEXING
SECTION

λ1

522
LIGHT
RECEPTION
SECTION

λ2

523
LIGHT
RECEPTION
SECTION

524

525
AMPLIFICATION
SECTION

526

51

BASE STATION

F I G. 1 5

WAVELENGTH
MULTIPLEXED
SIGNAL
(λ1,λ2)

60

531

WAVELENGTH
DEMULTIPLEXING
SECTION

λ1

λ2

532

LIGHT
RECEPTION
SECTION

533

LIGHT
RECEPTION
SECTION

534

LEVEL
COMPARISON
SECTION

535

CONTROL
SECTION

536

537

AMPLIFICATION
SECTION

51

538

BASE STATION

FIG. 16

WAVELENGTH
MULTIPLEXED
SIGNAL
(λ1,λ2)

60

541
WAVELENGTH
DEMULTIPLEXING
SECTION

λ1

λ2

542

543
LIGHT
RECEPTION
SECTION

546
AMPLIFICATION
SECTION

51

547

545
CONTROL
SECTION

544
LEVEL
COMPARISON
SECTION

BASE STATION

EP 1 639 727 B1

# FIG. 17

EP 1 639 727 B1

FIG. 18

FIG. 19

POLARIZED
WAVE
COMBINED
SIGNAL

~90

~81

815

~811

POLARIZED
WAVE
SEPARATION
SECTION

~812

λ1

λ2

~813

LIGHT
RECEPTION
SECTION

~814

AMPLIFICATION
SECTION

BASE STATION

EP 1 639 727 B1

FIG. 20

826

81

821

POLARIZED
WAVE
COMBINED
SIGNAL

90

822

POLARIZED
WAVE
SEPARATION
SECTION

$\lambda 1$

LIGHT
RECEPTION
SECTION

824

823

$\lambda 2$

LIGHT
RECEPTION
SECTION

825

AMPLIFICATION
SECTION

BASE STATION

F I G. 2 1

POLARIZED
WAVE
COMBINED
SIGNAL

90

838

81

BASE STATION

831 — POLARIZED WAVE SEPARATION SECTION

λ1

λ2

832 — LIGHT RECEPTION SECTION

833 — LIGHT RECEPTION SECTION

834 — LEVEL COMPARISON SECTION

835 — CONTROL SECTION

836

837 — AMPLIFICATION SECTION

43

FIG. 22

847

81

POLARIZED
WAVE
COMBINED
SIGNAL

90

841

POLARIZED
WAVE
SEPARATION
SECTION

λ1

λ2

842

843

LIGHT
RECEPTION
SECTION

846

AMPLIFICATION
SECTION

845

CONTROL
SECTION

844

LEVEL
COMPARISON
SECTION

BASE STATION

EP 1 639 727 B1

FIG. 23

EP 1 639 727 B1

FIG. 24

F I G. 2 5

EP 1 639 727 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1107487 A

### Non-patent literature cited in the description

- **GRAHAM H. SMITH et al.** Overcoming Chromatic Dispersion Effects in Fiber-Wireless Systems Incorporating External Modulators. *IEEE Transactions on Microwave Theory and Techniques,* August 1997, vol. 45 (8), 1410-1415